# EUROPEAN PATENT APPLICATION

(11) **EP 4 450 309 A1**
(43) Date of publication of application: **23.10.2024**
(21) Application number: 24170663.9
(22) Date of filing: 16.04.2024
(51) Int. Cl.: B60K 1/02

(54) **ELECTRIC DRIVE APPARATUS, ELECTRIC DRIVE SYSTEM AND ELECTRICAL DEVICE**

(30) Priority: 17.04.2023 CN 202310411987
(71) Applicant: Contemporary Amperex Intelligence Technology (Shanghai) Limited, Shanghai 200000 (CN); Contemporary Amperex Technology Co., Limited, Ningde, Fujian 352100 (CN)
(72) Inventor: ZHANG, Junhui, Shanghai, 200000 (CN); XIA, Ji, Shanghai, 200000 (CN)
(74) Representative: Rowlands, Stuart Michael

(57) **Abstract**

The present disclosure provides an electric drive device, an electric drive system and an electrical device. The above-described electric drive device includes a first motor, a second motor, a transmission mechanism and a controller. The second motor is spaced apart from the first motor in an axial direction of the first motor. The transmission mechanism is arranged between the first motor and the second motor. The controller is arranged between the first motor and the second motor. At least part of the controller and at least part of the transmission mechanism are arranged on two opposite sides of a rotation shaft of the first motor. Embodiments of the present disclosure provide an electric drive device by disposing the transmission mechanism and the controller between the first motor and the second motor, and disposing at least part of the controller and at least part of the transmission mechanism on opposite sides of a rotation shaft of the first motor, such that a space of the rotation shaft of the first motor on the side facing away from at least part of the transmission mechanism is effectively utilized, thereby effectively reducing a volume of the electric drive device.

## Description

### TECHNICAL FIELD

The present disclosure relates to the technical field of electric drive, and particularly relates to an electric drive apparatus, an electric drive system and an electrical device.

### BACKGROUND

The electric drive apparatus may be used as a power supply for a vehicle by converting electrical energy provided by a battery into mechanical energy to drive the vehicle in motion. The electric drive apparatus is usually arranged in a cabin of the vehicle. However, due to a large volume of the electric drive apparatus, this is not conducive to improving the space efficiency of the cabin.

### SUMMARY

An object of embodiments of the present disclosure is to provide an electric drive apparatus, an electric drive system, and an electrical device to solve the technical problem that the electric drive apparatus is large in volume in the related art.

In order to achieve the above-described object, the technical solution adopted by the embodiments of the present disclosure is to provide an electric drive apparatus, include:
a first motor;
a second motor spaced apart from the first motor along an axial direction of the first motor; and
a transmission mechanism provided between the first motor and the second motor;
a controller provided between the first motor and the second motor, at least part of the controller and at least part of the transmission mechanism being provided on opposite sides of a rotation shaft of the first motor.

The electric drive apparatus provided by the embodiments of the present disclosure has at least the following advantageous effects: embodiments of the present disclosure provide an electric drive apparatus by disposing the transmission mechanism and the controller between the first motor and the second motor, and disposing at least part of the controller and at least part of the transmission mechanism on opposite sides of a rotation shaft of the first motor, such that a space of the rotation shaft of the first motor on a side facing away from the at least part of the transmission mechanism is effectively utilized, thereby effectively reducing a volume of the electric drive apparatus.

In some embodiments of the present disclosure, the rotation shaft of the first motor and a rotation shaft of the second motor are connected to a power input end of the transmission mechanism, and at least part of the controller is provided on a side of the rotation shaft of the first motor facing away from a power output end of the transmission mechanism.

By adopting the above-described technical solution, the space of the rotation shaft of the first motor on the side facing away from the power output end of the transmission mechanism is effectively utilized, thereby effectively reducing the volume of the electric drive apparatus.

In some embodiments of the present disclosure, the controller and the transmission mechanism are arranged along a first direction that is parallel to a mounting plane of the electric drive apparatus and perpendicular to the axial direction of the first motor.

By adopting the solution described above, a length dimension of the electric drive apparatus is effectively reduced, thereby effectively reducing the volume of the electric drive apparatus.

In some embodiments of the present disclosure, the controller has an embedded portion provided between the first motor and the second motor, the embedded portion having a dimension in the first direction smaller than a dimension of the embedded portion in a second direction, and the second direction being perpendicular to the axial direction of the first motor and the first direction.

By adopting the above-described technical solution, the length space of the electric drive apparatus occupied by the controller can be reduce, while enabling the controller to more fully utilize the height space of the electric drive apparatus, so that it can further reduce the length dimension of the electric drive apparatus without changing the height dimension of the electric drive apparatus, thereby further reducing the volume of the electric drive apparatus.

In some embodiments of the present disclosure, the controller has an embedded portion provided between the first motor and the second motor, the embedded portion having a dimension in the first direction smaller than a dimension of the embedded portion in the axial direction of the first motor.

By adopting the above-described technical solution, it is possible to reduce the length space of the electric drive apparatus occupied by the controller, while enabling the controller to more fully utilize the width space of the electric drive apparatus, so that it can further reduce the length dimension of the electric drive apparatus without changing the width dimension of the electric drive apparatus, thereby further reducing the volume of the electric drive apparatus.

In some embodiments of the present disclosure, in the first direction, the controller has a first spacing from a central axis of the first motor, and a ratio of the first spacing to a radius of the first motor is smaller than or equal to 0.4.

By adopting the above-described technical solution, the amount of protrusion of the controller in the first direction with respect to the first motor or the second motor can be reduced, further reducing the length dimension of the electric drive apparatus, thereby further reducing the volume of the electric drive apparatus.

In some embodiments of the present disclosure, the controller does not protrude from the first motor towards one side in a second direction; and/or
the controller does not protrude from the first motor towards the other side in the second direction;
the second direction is perpendicular to the axial direction of the first motor and the first direction.

By adopting the above-described technical solution, it can reduce the amount of protrusion of the controller in the second direction with respect to the first motor, effectively reducing the height dimension of the electric drive apparatus, thereby further reducing the volume of the electric drive apparatus.

In some embodiments of the present disclosure, the transmission mechanism includes a first shell and the controller includes a second shell, the first shell being in contact with the second shell.

By adopting the above-described technical solution, space between the transmission mechanism and the controller can be saved, further reducing the length dimension of the electric drive apparatus, thereby further reducing the volume of the electric drive apparatus.

In some embodiments of the present disclosure, the first shell includes a first casing and a first shaft seat fixedly connected in the first casing, a power input end of the transmission mechanism is rotatably mounted on the first shaft seat, and the second shell abuts against the first shaft seat.

By adopting the above-described technical solution, it can minimize the distance between the controller and the power input end of the transmission mechanism without interference between the controller and the transmission mechanism, further reducing the length dimension of the electric drive apparatus, thereby further reducing the volume of the electric drive apparatus.

In some embodiments of the present disclosure, the second shell includes a second casing abutting the first shaft seat and a first cover plate covering the second casing.

By adopting the above-described technical solution, it can minimize the distance between the controller and the power input end of the transmission mechanism without interference between the controller and the transmission mechanism, further reducing the length dimension of the electric drive apparatus, thereby further reducing the volume of the electric drive apparatus.

In some embodiments of the present disclosure, the first cover plate detachably covers a side of the second casing facing away from the first shell.

By adopting the above-described technical solution, the disassembly and assembly operation of the controller is facilitated.

In some embodiments of the present disclosure, a connection between a side of the second shell facing away from the first shell and a side of the second shell facing away from a mounting plane of the electric drive apparatus is of a rounded structure; and/or
a connection between a side of the second shell facing away from the first shell and a side of the second shell facing towards a mounting plane of the electric drive apparatus is of a rounded structure.

By adopting the above-described technical solution, the amount of protrusion of the controller with respect to the first motor or the second motor can be reduced, thereby further reducing the volume of the electric drive apparatus.

In some embodiments of the present disclosure, a side of the second shell facing away from the first shell is of a first arc structure, and a central axis of the first arc structure is parallel to a central axis of the first motor.

By adopting the above-described technical solution, an outer contour structure of the side of the second shell facing away from the first shell is substantially adapted to an outer contour structure of the first motor, and the amount of protrusion of the controller relative to the first motor is effectively reduced, thereby further reducing the volume of the electric drive apparatus.

In some embodiments of the present disclosure, the central axis of the first arc structure coincides with the central axis of the first motor, and a radius of the first arc structure is equal to a radius of the first motor.

By adopting the above-described technical solution, an outer contour structure of the side of the second shell facing away from the first shell is adapted to an outer contour structure of the first motor to a maximum extent, and the amount of protrusion of the controller relative to the first motor is further reduced, thereby further reducing the volume of the electric drive apparatus.

In some embodiments of the present disclosure, the controller further includes a control module, the control module has a second arc structure, and a central axis of the second arc structure is parallel to the central axis of the first motor.

By adopting the solution described above, an outer contour structure of the control module is substantially adapted to an outer contour structure of the side of the second shell facing away from the first shell, making the overall structure of the controller more compact, thereby further reducing the volume of the electric drive apparatus.

In some embodiments of the present disclosure, the first shell and the second shell are connected to form a shell body, the shell body has a first connection end on one side of the first motor in the axial direction and a second connection end on the other side of the first motor in the axial direction, the first motor is directly connected to the first connection end, and the second motor is directly connected to the second connection end.

By adopting the above-described technical solution, the transition connection between the first motor and the first connection end of the shell body and the transition connection between the second motor and the second connection end of the shell body are eliminated, effectively reducing the width dimension of the electric drive apparatus, thereby further reducing the volume of the electric drive apparatus.

In some embodiments of the present disclosure, the first motor includes a third shell directly connected to the first connection end, and the second motor includes a fourth shell directly connected to the second connection end.

By adopting the above-described technical solution, the transition connection between the first motor and the first connection end of the shell body and the transition connection between the second motor and the second connection end of the shell body are eliminated, effectively reducing the width dimension of the electric drive apparatus, thereby further reducing the volume of the electric drive apparatus.

In some embodiments of the present disclosure, the shell body has a transmission cavity;
the transmission cavity passes through the first connection end to form a first cavity port, the third shell includes a third casing and a second cover plate connected to the third casing, and the third casing and the second cover plate are directly connected to the first connection end to cap the first cavity port; and/or
the transmission cavity passes through the second connection end to form a second cavity port, and the fourth shell includes a fourth casing and a third cover plate connected to the fourth casing, and the fourth casing and the third cover plate are directly connected to the second connection end to cap the second cavity port.

By adopting the above-described technical solution, the second cover plate is integrated on the third shell and the third cover plate is integrated on the fourth shell, the integration degree of the electric drive apparatus is effectively increased, thereby further reducing the volume of the electric drive apparatus.

In some embodiments of the present disclosure, the third shell includes a third casing and a first mount bracket connected to the third casing; and/or
the fourth shell includes a fourth casing and a second mount bracket connected to the fourth casing.

By adopting the above-described technical solution, the first mount bracket is integrated on the third shell and the first mount bracket is integrated on the fourth shell, the integration degree of the electric drive apparatus is effectively increased, thereby further reducing the volume of the electric drive apparatus.

In some embodiments of the present disclosure, the first shell is integrally formed with the second shell.

By adopting the above-described technical solution, the rigidity of the electric drive apparatus is effectively improved, while the production process of the electric drive apparatus is effectively simplified, thereby reducing the production cost of the electric drive apparatus.

In some embodiments of the present disclosure, the transmission mechanism includes a first transmission assembly and a second transmission assembly, the first transmission assembly includes a first power input shaft and a first power output shaft in a transmission connection to the first power input shaft, and the second transmission assembly includes a second power input shaft and a second power output shaft in a transmission connection to the second power input shaft, and the first power input shaft is connected to a rotation shaft of the first motor, and the second power input shaft is connected to a rotation shaft of the second motor.

By adopting the above-described technical solution, it is effectively achieved that the power output by the first motor and the power output by the second motor are output outward.

In some embodiments of the present disclosure, a first end surface of the first power input shaft is flush with a first end surface of the first power output shaft, and a second end surface of the first power input shaft is flush with a second end surface of the first power output shaft.

By adopting the above-described technical solution, the arrangement of the first transmission assembly is facilitated by the planar configuration of the first transmission assembly in parallel on the opposite sides of the axial direction of the first motor, so that the overall structure of the electric drive apparatus becomes more compact, thereby further reducing the volume of the electric drive apparatus.

In some embodiments of the present disclosure, the first transmission assembly further includes a first transition shaft, the first transition shaft is in a transmission connection between the first power input shaft and the first power output shaft, a first end surface of the first power input shaft, a first end surface of the first transition shaft and a first end surface of the first power output shaft are flush with each other, and a second end surface of the first power input shaft, a second end surface of the first transition shaft and a second end surface of the first power output shaft are flush with each other.

By adopting the above-described technical solution, the arrangement of the first transmission assembly is facilitated by the planar configuration of the first transmission assembly in parallel on the opposite sides of the axial direction of the first motor, so that the overall structure of the electric drive apparatus becomes more compact, thereby further reducing the volume of the electric drive apparatus.

In some embodiments of the present disclosure, a first end surface of the second power input shaft is flush with a first end surface of the second power output shaft, and a second end surface of the second power input shaft is flush with a second end surface of the second power output shaft.

By adopting the above-described technical solution, the arrangement of the second transmission assembly is facilitated by the planar configuration of the second transmission assembly in parallel on the opposite sides of the axial direction of the first motor, so that the overall structure of the electric drive apparatus becomes more compact, thereby further reducing the volume of the electric drive apparatus.

In some embodiments of the present disclosure, the second transmission assembly further includes a second transition shaft, the second transition shaft is in a transmission connection between the second power input shaft and the second power output shaft, a first end surface of the second power input shaft, a first end surface of the second transition shaft and a first end surface of the second power output shaft are flush with each other, and a second end surface of the second power input shaft, a second end surface of the second transition shaft and a second end surface of the second power output shaft are flush with each other.

By adopting the above-described technical solution, the arrangement of the second transmission assembly is facilitated by the planar configuration of the second transmission assembly in parallel on the opposite sides of the axial direction of the first motor, so that the overall structure of the electric drive apparatus becomes more compact, thereby further reducing the volume of the electric drive apparatus.

In some embodiments of the present disclosure, the first transmission assembly has a structure same as a structure of the second transmission assembly, and the first transmission assembly and the second transmission assembly are arranged along the axial direction of the first motor in a parallel way.

By using the above-described technical solution, only one type of transmission assembly needs to be produced, the cost of molding is reduced, thereby reducing the production cost of the electric drive apparatus.

In some embodiments of the present disclosure, the electric drive apparatus further includes a first cooling mechanism and a second cooling mechanism, the transmission mechanism includes a first transmission assembly and a second transmission assembly, the first cooling mechanism is configured to sequentially supply a cooling medium to the first motor and the first transmission assembly, the second cooling mechanism is configured to sequentially supply a cooling medium to the second motor and the second transmission assembly, and the first cooling mechanism and the second cooling mechanism are in communication between a cooling medium outlet of the first motor and a cooling medium outlet of the second motor.

By adopting the above-described technical solution, the first cooling mechanism and the second cooling mechanism are in communication between the cooling medium outlet of the first motor and the cooling medium outlet of the second motor, so as to realize that the cooling medium discharged from the cooling medium outlet of the first motor and the cooling medium discharged from the cooling medium outlet of the second motor are complementary, and particularly in the case where the electric drive apparatus is inclined, it can be ensured that the amount of the cooling medium supplied to the first transmission assembly and the amount of the cooling medium supplied to the second transmission assembly become more balanced, so that the first transmission assembly and the second transmission assembly are well cooled and lubricated. The utilization rate of the cooling medium is improved and the loss is reduced.

In some embodiments of the present disclosure, the first motor includes a first body, the second motor includes a second body, the first body has a structure same as a structure of the second body, and a rotation shaft leading-out side of the first body is opposite to a rotation shaft leading-out side of the second body.

By using the above-described technical solution, only one type of motor body needs to be produced, the cost of molding is reduced, thereby reducing the production cost of the electric drive apparatus.

In some embodiments of the present disclosure, the first body has a first wire connection portion, and the second body has a second wire connection portion, and an orientation of the first wire connection portion is the same as an orientation of the second wire connection portion.

By adopting the above-described technical solution, the wire connection operation of the first motor and the second motor is facilitated, while the wire connection structure of the electric drive apparatus is optimized.

In some embodiments of the present disclosure, the first motor is an axial magnetic flux motor; and/or the second motor is an axial magnetic flux motor.

By adopting the solution described above, the width dimension of the electric drive is effectively reduced, thereby further reducing the volume of the electric drive apparatus.

An embodiment of the present disclosure also provides an electric drive apparatus configured to drive, the electric drive apparatus including:
a first motor;
a second motor spaced apart from the first motor along an axial direction of the first motor; and
a controller provided between the first motor and the second motor, the controller being provided on a front side or a rear side of a rotation shaft of the first motor in a forward direction of the vehicle.

The electric drive apparatus provided by the embodiments of the present disclosure has at least the following advantageous effects: embodiments of the present disclosure provide an electric drive apparatus by disposing the controller between the first motor and the second motor, and disposing the controller on a front side or a rear side of the rotation shaft of the first motor in a forward direction of the vehicle, so that a space on the front side of the rotation shaft of the first motor or a space on the rear side of the rotation shaft of the first motor is effectively used, thereby effectively reducing the volume of the electric drive apparatus.

An embodiment of the present disclosure further provides an electric drive system including a battery and the electric drive apparatus of any of the embodiments described above, the battery being electrically connected to the electric drive apparatus.

An embodiment of the present disclosure provides an electric drive system having at least the following beneficial effects: an embodiment of the present disclosure provides an electric drive system that effectively reduces the volume of the electric drive system by employing the electric drive apparatus of any of the embodiments described above.

An embodiment of the present disclosure further provides an electrical device including the above-described electric drive system.

The electrical device provided by the embodiments of the present disclosure has at least the following advantageous effects: an embodiment of the present disclosure provides an electrical device that effectively improves space utilization of the electrically powered device by employing the above-described electric drive system.

### BRIEF DESCRIPTION OF DRAWINGS

In order to explain the technical solutions of the present disclosure more clearly, the following contents will briefly introduce the drawings which need to be used in the embodiments or prior art. It should be apparent that the drawings in the following description are some embodiments of the present disclosure, and it would be obvious for a person skilled in the art to obtain other drawings according to these drawings without involving any inventive effort.
Fig. 1 is a structural schematic diagram of a vehicle according to an embodiment of the present disclosure;
Fig. 2 is an exploded structural schematic diagram of a battery according to an embodiment of the present disclosure;
Fig. 3 is a structural schematic diagram of an electric drive apparatus according to an embodiment of the present disclosure;
Fig. 4 is a structural schematic diagram from a right view of the electric drive apparatus shown in Fig. 3;
Fig. 5 is a cross-sectional structural schematic view of the electric drive apparatus shown in Fig. 4 along a direction of the A-A line;
Fig. 6 is a structural schematic diagram of an electric drive apparatus according to another embodiment of the present disclosure;
Fig. 7 is a structural schematic diagram of a first shell and a second casing of the electric drive apparatus provided according to an embodiment of the present disclosure;
Fig. 8 is a structural schematic diagram from a rear view of Fig. 7;
Fig. 9 is a cross-sectional structural schematic view along a direction of the B-B line in Fig. 7;
Fig. 10 is a structural schematic diagram of a controller according to an embodiment of the present disclosure;
Fig. 11 is a structural schematic diagram of a third shell in the first motor according to an embodiment of the present disclosure;
Fig. 12 is a schematic structural diagram of a fourth shell in the second motor according to an embodiment of the present disclosure;
Fig. 13 is a structural schematic diagram of an arrangement of a first body in the first motor and a second body in the second motor according to an embodiment of the present disclosure;
Fig. 14 is a structural schematic diagram of an arrangement of a first transmission assembly and a second transmission assembly of a transmission mechanism provided according to an embodiment of the present disclosure; and
Fig. 15 is a structural schematic diagram of a cooling principle of the electric drive apparatus according to an embodiment of the present disclosure.

In the drawings, reference numbers are as folows:
1000, vehicle;
100, electric drive system;
10, electric drive apparatus;
11, first motor; 111, third shell; 1111, third casing; 1112, second cover plate; 112, first body; 1121, first wire connection portion;
12, second motor; 121, fourth shell; 1211, fourth casing; 1212, third cover plate; 122, second body; 1221, second wire connection portion;
13, transmission mechanism; 131, first shell; 1311, first casing; 1312, first shaft seat; 1313, transmission cavity; 1314, support plate; 1315, second shaft seat; 1316, third shaft seat; 1317, third mount bracket; 132, first transmission assembly; 1321, first power input shaft; 1322, first power output shaft; 1323, first transition shaft; 1324, first bearing; 1325, third bearing; 1326, fifth bearing; 133, second transmission assembly; 1331, second power input shaft; 1332, second power output shaft; 1333, second transition shaft; 1334, second bearing; 1335, fourth bearing; 1336, sixth bearing;
14, controller; 141, second shell; 1411, second casing; 1412, first cover plate; 142, control module;
15, mounting plane;
16, first cooling mechanism; 161, first current collector; 162, first shunt; 163, first liquid inlet pipe; 164, first power pump; 165, first heat exchanger; 166, first filter;
17, second cooling mechanism; 171, second current collector; 172, second shunt; 173, second liquid inlet pipe; 174, second power pump; 175, second heat exchanger; 176, second filter;
18, first connection end;
19, second connection end;
20, battery;
21, box; 211, first portion; 212, second portion;
22, battery cell;
200, vehicle body.

### DESCRIPTION OF EMBODIMENTS

In order to make the technical problems, technical solutions and advantageous effects solved by the present disclosure more clear, the following detailed description of the present disclosure will be made in conjunction with the drawings and the embodiments. It should be understood that the particular embodiments described herein are illustrative only and are not restrictive.

It will be understood that when an element is referred to as being "fixed to" or "arranged on" another element, it can be directly or indirectly on the other element. When an element is referred to as being "connected" to another element, it can be directly or indirectly connected to the other element.

It should be noted that the orientation or positional relationship indicated by the terms "length", "width", "upper", "lower", "front", "rear", "left", "right", "vertical", "horizontal", "top", "bottom", "inner", "outer", etc. is based on the orientation or positional relationship shown in the drawings, merely to facilitate the description of the present disclosure and simplify the description, and does not indicate or imply that the devices or units referred to must have a particular orientation, be constructed and operated in a particular orientation, and thus should not be construed as limiting the present disclosure.

Furthermore, the terms "first", "second", "third", "fourth", "fifth", and "sixth" are used for descriptive purposes only and are not to be construed as indicating or implying relative importance or implicitly indicating the number of technical features indicated. Thus, a feature defined as "first", "second", "third", "fourth", "fifth", "sixth" may explicitly or implicitly include one or more of the feature. In the description of the present disclosure, the meaning of "plurality" is two or more, unless specifically and specifically limited otherwise.

An electric drive apparatus is a main power device of an electric automobile, and the electric drive apparatus is used for converting electric energy provided by a battery into mechanical energy to drive the electric automobile to travel. At present, the electric drive apparatus can be divided into a centralized electric drive apparatus and a distributed electric drive apparatus. The centralized electric drive apparatus transmits an output torque of the motor to left and right wheels of the electric automobile via a mechanical transmission such as a speed changer and a speed reducer so as to drive the electric automobile to travel. The distributed electric drive apparatus generally includes at least two motors. The output torque of each motor is transmitted to one wheel so as to drive the electric automobile to travel, so that the distributed electric drive apparatus can achieve independent control on a single wheel of the electric automobile. Therefore, compared with the electric automobile with the centralized electric drive apparatus, the electric automobile with the distributed electric drive apparatus has better manoeuvrability, which makes the distributed electric drive apparatus more and more popular with automobile manufacturers.

In the related art, the two motors of the distributed electric drive apparatus are arranged at intervals along the axial direction. Since the outer diameter of the motors is larger, more arrangement spaces are formed between the two motors. The transmission mechanism of the distributed electric drive apparatus is connected to the rotation shafts of the two motors, so that the transmission mechanism occupies the space of the above-described arrangement space on one side, and the controller of the distributed electric drive apparatus is arranged above the transmission mechanism. In this way, the space of the above-described arrangement space on the other side is not effectively used, resulting in a decrease in the utilization rate of the space inside the distributed electric drive apparatus. As a result, the volume of the distributed electric drive apparatus increases, and after the distributed electric drive apparatus is mounted in the cabin of the electric automobile, the distributed electric drive apparatus needs to occupy more cabin space, which is not conducive to improving the space utilization of the cabin.

In order to reduce the volume of the distributed electric drive apparatus and improve space utilization of a cabin of the electric automobile, embodiments of the present disclosure provide an electric drive apparatus in which the transmission mechanism and a controller are provided between the first motor and the second motor, and at least part of the controller and at least part of the transmission mechanism are provided on opposite sides of a rotation shaft of the first motor, such that a space of the rotation shaft of the first motor on a side facing away from at least part of the transmission mechanism is effectively utilized, thereby effectively reducing the volume of the electric drive apparatus.

The electric drive apparatus provided by the embodiments of the present disclosure may be applied to an electrical device, which may be, but not limited to, a vehicle, a ship, an airplane, a spacecraft, an excavator, a crane, an elevator lift, an elevator, and the like, and is not specifically limited herein.

The following embodiments will be described by taking the electrical device of one embodiment of the present disclosure as the vehicle for convenience of explanation.

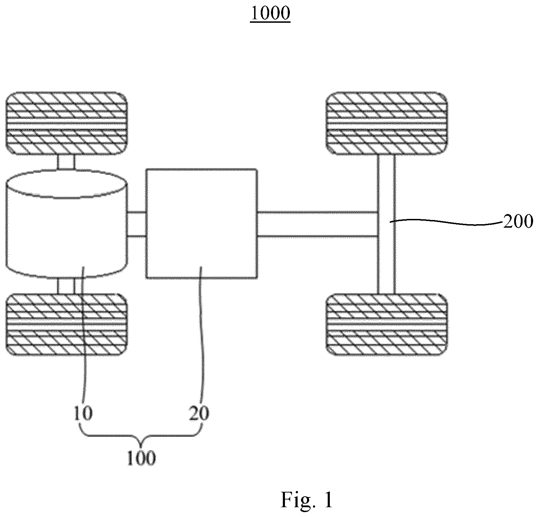

With reference to Fig. 1, Fig. 1 is a structural schematic diagram of a vehicle according to an embodiment of the present disclosure. According to the division of power sources, the vehicle 1000 can be a pure electric automobile, a hybrid electric automobile or an extended range vehicle, etc. The vehicle 1000 may be a front-drive vehicle, a rear-drive vehicle or a four-wheel-drive vehicle according to the drive mode. The vehicle 1000 includes a vehicle body 200 and an electric drive system 100.

The vehicle body 200 is a main support member of the vehicle 1000, and has a cabin for accommodating a power mechanism, an electric control mechanism, a transmission mechanism, etc. of the vehicle 1000 and a passenger compartment for providing an operation space and a riding space for a passenger. When the vehicle 1000 is a front-drive vehicle, the cabin is arranged at a head of the vehicle body 200, namely, the cabin is a front cabin; when the vehicle 1000 is a rear-drive vehicle, the cabin is arranged at a rear of the vehicle body 200, namely, the cabin is a rear cabin, when the vehicle 1000 is a four-wheel-drive vehicle, the cabin is divided into a front cabin provided at the head of the vehicle body 200 and a rear cabin provided at the rear of the vehicle body 200. The passenger compartment is provided between the head and the rear of the vehicle body 200.

The electric drive system 100 is a power system of the vehicle 1000 for converting electric energy into mechanical energy and outputting the mechanical energy to wheels of the vehicle 1000 to drive the vehicle 1000 to travel. The electric drive system 100 is provided on the vehicle body 200. Specifically, a part of the electric drive system 100 may be provided in the cabin, and another part of the electric drive system 100 may be provided at a bottom of the vehicle body 200.

With reference to Fig. 1, an electric drive system 100 provided by an embodiment of the present disclosure includes a battery 20 and an electric drive apparatus 10.

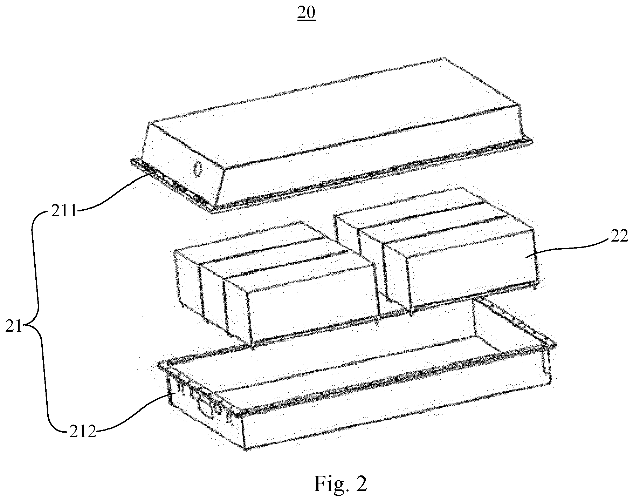

The battery 20 is used to provide electrical power to electric drive apparatus 10, and the battery 20 may be provided at a bottom or head or rear of the vehicle 1000. With reference to Fig. 2, Fig. 2 is an exploded structural schematic diagram of a battery 20 according to an embodiment of the present disclosure. The battery 20 includes a box 21 and a battery cell 22 accommodated in the box 21. Here, the box 21 serves to provide an accommodating space for the battery cell 22, and the box 21 may have various structures. In some embodiments, the box 21 may include a first portion 211 and a second portion 212 that cover each other, and the first portion 211 and the second portion 212 collectively define the accommodating space for receiving the battery cell 22. The second portion 212 can be a hollow structure with an opening on one end, the first portion 211 can be a plate-shaped structure, and the first portion 211 covers an opening side of the second portion 212, so that the first portion 211 and the second portion 212 together define an accommodating space. The first portion 211 and the second portion 212 may each have a hollow structure with an opening on one end, and the opening side of the first portion 211 covers the opening side of the second portion 212. Of course, the box 21 formed by the first portion 211 and the second portion 212 may have various shapes such as a cylinder, a rectangular parallelepiped, etc.

In some embodiments, the box 21 may be part of a chassis structure of vehicle 1000. For example, a portion of the box 21 may become at least part of a floor of the vehicle 1000, or a portion of the box 21 may become at least part of a transom and a carling of the vehicle 1000.

Of course, in some embodiments, the battery 20 may not include the box 21, but a plurality of battery cells 22 are electrically connected and made into a whole by necessary fixing structures and then assembled into the vehicle 1000.

In the battery 20, a plurality of battery cells 22 may be provided, and the plurality of battery cells 22 may be connected in series or in parallel or in a series-parallel connection. The series-parallel connection refers to both the series connection and the parallel connection of the plurality of battery cells 22. The plurality of battery cells 22 may be directly connected in series or in parallel or or in a series-parallel connection, and the whole of the plurality of battery cells 22 is accommodated in the box 21. Of course, the battery 20 may be provided such that the plurality of battery cells 22 are first connected in series or parallel or in a series-parallel connection to form a battery 20 module, and the plurality of battery 20 modules are then connected in series or parallel or in a series-parallel connection to form a whole and are accommodated in the box 21. The battery 20 may further include other function components. For example, the battery 20 may also include bus bars for making electrical connections between the plurality of battery cells 22.

Each battery cell 22 can be a secondary battery or a primary battery. The secondary battery refers to a battery cell 22 which can continue to be used by activating an active material by means of charging after the battery cell 22 is discharged, and the primary battery refers to a battery cell 22 which cannot continue to be used by activating an active material by means of charging after the battery cell 22 is depleted of electric energy. The battery cell 22 may be a lithium ion battery, a sodium ion battery, a sodium lithium ion battery, a lithium metal battery, a sodium metal battery, a lithium sulfur battery, a magnesium ion battery, a nickel hydrogen battery, a nickel cadmium battery, a lead storage battery, or the like, but is not limited thereto. The battery cell 22 may be a cylindrical battery cell, a prismatic battery cell, a soft-packed battery cell or a battery cell in other shapes. The prismatic battery cell includes a square casing battery cell, a blade-shaped battery cell, a multi-prismatic battery. The multi-prismatic battery is such as a hexagonal prismatic battery, etc. and the present disclosure is not particularly limited.

The electric drive apparatus 10 serves to convert electric power supplied from the battery 20 into mechanical power and output the mechanical power to wheels of the vehicle 1000 to drive the vehicle 1000 to travel. The electric drive apparatus 10 is mounted in the cabin. In particular, when the vehicle 1000 is a front-drive vehicle, the electric drive apparatus 10 is mounted in the front cabin and is used to output the above-described mechanical energy to the front wheels of the vehicle 1000 to drive the vehicle 1000 to travel, when the vehicle 1000 is a rear-drive vehicle, the electric drive apparatus 10 is mounted in the rear cabin and is used to output the above-described mechanical energy to the rear wheels of the vehicle 1000 so as to drive the vehicle 1000 to travel, when the vehicle 1000 is a four-wheel-drive vehicle, there are two electric drive apparatuses 10, one of which is mounted in the front cabin and is used to output the above-mentioned mechanical energy to the front wheels of the vehicle 1000, and the other of which is mounted in the rear cabin and is used to output the above-mentioned mechanical energy to the rear wheels of the vehicle 1000 to drive the vehicle 1000 to travel.

The electric drive apparatus 10 according to an embodiment of the present disclosure will be described with reference to the accompanying drawings.

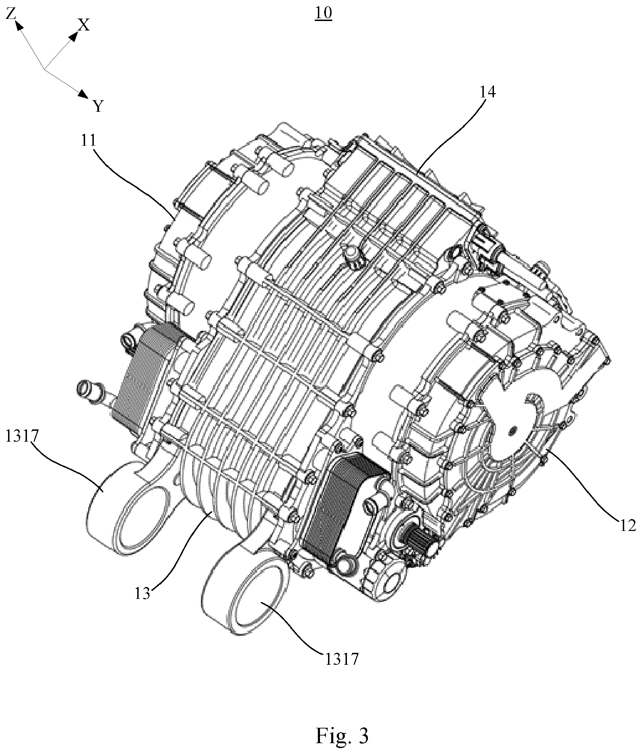

With reference to Figs. 3 to 5 together, the present embodiment provides an electric drive apparatus 10 including a first motor 11, a second motor 12, a transmission mechanism 13, and a controller 14. The second motor 12 is spaced apart from the first motor 11 along an axial direction of the first motor 11. The transmission mechanism 13 is provided between the first motor 11 and the second motor 12. The controller 14 is provided between the first motor 11 and the second motor 12, and at least part of the controller 14 and at least part of the transmission mechanism 13 are provided on opposite sides of a rotation shaft of the first motor 11.

The first motor 11 and the second motor 12 are used for converting the electric energy provided by the battery 20 into mechanical energy. During the operation of the electric drive apparatus 10, a rotational speed of the first motor 11 and a rotational speed of the second motor 12 may be the same, or the rotational speed of the first motor 11 and the rotational speed of the second motor 12 may be different. The rotation shaft of the first motor 11 is parallel to a rotation shaft of the second motor 12, and the first motor 11 and the second motor 12 are spaced apart in the axial direction of the first motor 11 to form an arrangement space. The first motor 11 can be arranged coaxially with the second motor 12, namely, a central axis of the first motor 11 and a central axis of the second motor 12 coincide. The first motor 11 can also be arranged on a different axis from the second motor 12, namely, the central axis of the first motor 11 and the central axis of the second motor 12 are arranged at intervals in any direction perpendicular to the axial direction of the first motor 11. The "central axis" of the motor refers to an axial centerline of the rotation shaft (or "rotor shaft") of the motor. Alternatively, the first motor 11 may be an axial magnetic flux motor, can also be a radial magnetic flux motor, and can also be a servo motor, a brush motor, a brushless motor, etc. and is not particularly limited herein. Similarly, the second motor 12 may be an axial magnetic flux motor, a radial magnetic flux motor, a servo motor, a brush motor, a brushless motor, etc. and is not particularly limited herein.

The transmission mechanism 13 is used to transmit the above-described mechanical energy to the wheels of the vehicle 1000 in a manner of changing the rotational speed and torque of the first motor 11 and the rotational speed and torque of the second motor 12. For example, the transmission mechanism 13 transmits the above-described mechanical energy to the wheels of the vehicle 1000 in a manner of decreasing the the rotational speed of the first motor 11 and the rotational speed of the second motor 12 and increasing the torque of the first motor 11 and the torque of the second motor 12. For example, the transmission mechanism 13 transmits the aforementioned mechanical energy to the wheels of the vehicle 1000 in a manner of increasing the rotational speed of the first motor 11 and the rotational speed of the second motor 12 and decreasing the torque of the first motor 11 and the torque of the second motor 12. Alternatively, the transmission mechanism 13 may be, but is not limited to, a pinion transmission mechanism 13, a worm transmission mechanism 13, a planetary gear transmission mechanism 13, a continuously variable transmission mechanism 13, or the like, and is not specifically limited herein.

The controller 14 is used to convert the direct current output from the battery 20 into alternating current and deliver the alternating current to the first motor 11 and the second motor 12, and at the same time to control the operation of the first motor 11 and the second motor 12. For example, the controller 14 is used to control the start and stop, the rotational speed, the torque, etc. of the first motor 11 and the second motor 12. In other words, the first motor 11, the second motor 12 and the battery 20 are electrically connected to the controller 14. The direct current output by the battery 20 can be transmitted to the controller 14 via an electrical connection path between the battery 20 and the controller 14. After the controller 14 converts the direct current into alternating current, the alternating current can be transmitted to the first motor 11 and the second motor 12 via an electrical connection path between the controller 14 and the first motor 11 and an electrical connection path between the controller 14 and the second motor 12 so as to drive the first motor 11 and the second motor 12 to operate. At the same time, a control signal of the controller 14 can be transmitted to the first motor 11 and the second motor 12 via the electrical connection path between the controller 14 and the first motor 11 and the electrical connection path between the controller 14 and the second motor 12. An operation state signal of the first motor 11 can be transmitted to the controller 14 via the electrical connection path between the controller 14 and the first motor 11, and an operation state signal of the second motor 12 can be transmitted to the controller 14 via the electrical connection path between the controller 14 and the second motor 12. In this way, the controller 14 is implemented to control the operation of the first motor 11 and the second motor 12.

The opposite sides of the rotation shaft of the first motor 11 refer to the positions of the two sides of the rotation shaft of the first motor 11 along any direction perpendicular to the axial direction thereof. It will be appreciated that at least part of the transmission mechanism 13 and at least part of the controller 14 are arranged in the above-described arrangement space. In particular, at least part of the controller 14 is in a region of the above-described arrangement space on one side of the rotation shaft of the first motor 11, and at least part of the transmission mechanism 13 is arranged in a region of the above-described arrangement space on the other side of the rotation shaft of the first motor 11, in any direction perpendicular to the rotation shaft of the first motor 11.

Embodiments of the present disclosure provide an electric drive apparatus 10 by disposing the transmission mechanism 13 and the controller 14 between the first motor 11 and the second motor 12, and disposing at least a part of the controller 14 and at least a part of the transmission mechanism 13 on opposite sides of a rotation shaft of the first motor 11, so that a space of the rotation shaft of the first motor 11 on the side facing away from at least a part of the transmission mechanism 13 is effectively utilized, thereby effectively reducing a volume of the electric drive apparatus.

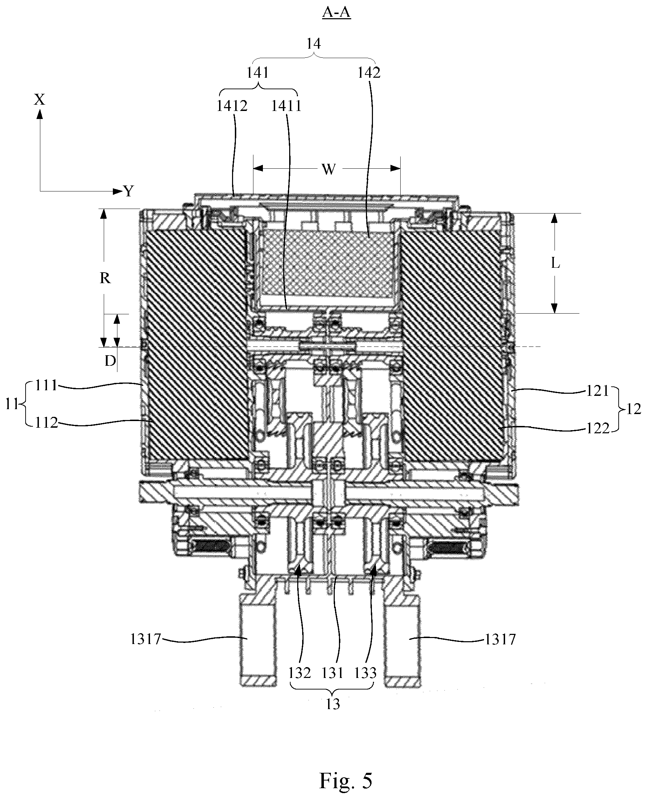

In some embodiments of the present disclosure, with reference to Fig. 5, the rotation shaft of the first motor 11 and the rotation shaft of the second motor 12 are connected to a power input end of the transmission mechanism 13, and at least part of the controller 14 is provided on the side of the rotation shaft of the first motor 11 facing away from the power output end of the transmission mechanism 13.

The rotation shaft of the first motor 11 and the rotation shaft of the second motor 12 are connected to the power input end of the transmission mechanism 13 to transfer mechanical energy output from the first motor 11 and mechanical energy output from the second motor 12 to the transmission mechanism 13. The power output end is connected to the wheels of the vehicle 1000 so as to transfer the mechanical energy output by the first motor 11 and the mechanical energy output by the second motor 12 to the corresponding wheels, thereby driving the vehicle 1000 to travel.

At least part of the controller 14 is provided on a side of the rotation shaft of the first motor 11 facing away from the power output end, that is, in any direction perpendicular to the rotation shaft of the first motor 11, the part of the controller 14 provided in the above-described arrangement space is located on one side of the rotation shaft of the first motor 11, and the power output end of the transmission mechanism 13 is located on the other side of the rotation shaft of the first motor 11.

By adopting the above-described technical solution, the space of the rotation shaft of the first motor 11 on the side facing away from the power output end of the transmission mechanism 13 is effectively utilized, thereby effectively reducing the volume of the electric drive apparatus 10.

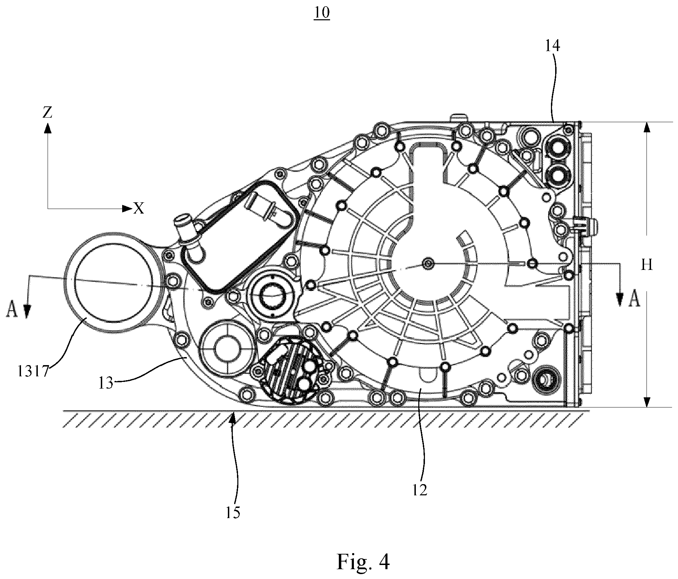

In some embodiments of the present disclosure, with reference to Figs. 4 and 5 together, the controller 14 and the transmission mechanism 13 are arranged along a first direction, and the first direction is parallel to a mounting plane 15 of the electric drive apparatus 10 and perpendicular to the axial direction of the first motor 11, such as the X-direction shown in Figs. 4 and 5.

The mounting plane 15 of the electric drive apparatus 10 refers to the plane where the bottom of the electric drive apparatus 10 is located in a state in which the electric drive apparatus 10 is mounted in the cabin of the vehicle 1000.. The mounting plane 15 is a plane parallel to a support surface of the vehicle 1000 when the vehicle 1000 is placed on the support surface (e.g. a ground, an assembly platform, etc.). It will be appreciated that neither the mounting plane 15 nor the support surface is limited to a strictly flat surface and may have a convex-concave configuration.

It will be appreciated that the first direction is parallel to the mounting plane 15 of the electric drive apparatus 10 and perpendicular to the axial direction of the first motor 11, i.e., the first direction is a length direction of the electric drive apparatus 10. Here, the "axial direction" of the motor refers to an extension direction of the rotation shaft of the motor.

By arranging the controller 14 and the transmission mechanism 13 in the first direction such that, in the first direction, the controller 14 is located on the side of the rotation shaft of the first motor 11 facing away from the power output end of the transmission mechanism 13, and the space of the rotation shaft of the first motor 11 on the side facing away from the power output end of the transmission mechanism 13 is effectively utilized, thereby effectively reducing the length dimension of the electric drive apparatus 10, thereby further reducing the volume of the electric drive apparatus 10.

In some embodiments of the present disclosure, with reference to Figs. 4 and 5 together, the controller 14 has an embedded portion provided between the first motor 11 and the second motor 12, the embedded portion having a smaller dimension in a first direction than in a second direction perpendicular to the axial direction of the first motor 11 and perpendicular to the first direction, such as the Z-direction shown in Fig. 4.

The embedded portion is a portion of the controller 14 provided in the above-described arrangement space.

It will be understood that the second direction is perpendicular to the axial direction of the first motor 11 and perpendicular to the first direction, i.e., the second direction is a height direction of the electric drive apparatus 10, in other words, the dimension of the embedded portion in the first direction is the length L of the embedded portion and the dimension of the embedded portion in the second direction is the height H of the embedded portion.

Since the controller 14 is provided on the side of the rotation shaft of the first motor 11 facing away from the power output end of the transmission mechanism 13 and the dimension of the region of the arrangement space on the side, facing away from the power output end of the transmission mechanism 13, of the rotation shaft of the first motor 11 in the first direction is shorter than the dimension thereof in the second direction, i.e., the length space of the region is smaller than the height space thereof. The length L of the embedded portion is smaller than the height H of the embedded portion, the length space of the region occupied by the controller 14 can be reduced, and at the same time, the height space of the region can be more fully utilized by the controller 14. With the height dimension of the electric drive apparatus 10 unchanged, the length dimension of the electric drive apparatus 10 can be further reduced, thereby further reducing the volume of the electric drive apparatus 10.

In some embodiments of the present disclosure, with reference to Fig. 5, the controller 14 has the embedded portion provided between the first motor 11 and the second motor 12, and the dimension of the embedded portion in the first direction is smaller than the dimension of the embedded portion in the axial direction of the first motor 11.

It can be understood that the axial direction of the first motor 11 is a width direction of the electric drive apparatus 10, in other words, the dimension of the embedded portion in the axial direction of the first motor 11 is the width of the embedded portion.

Since the width of the transmission mechanism 13 is usually large, at least part of the transmission mechanism 13 is arranged in the arrangement space between the first motor 11 and the second motor 12, so that the dimension of the region of the arrangement space on the side, facing away from the power output end of the transmission mechanism 13, of the rotation shaft of the first motor 11 in the first direction is smaller than the dimension thereof in the axial direction of the first motor 11, i.e., the length space of the region is smaller than the width space thereof. Therefore, by making the length L of the embedded portion smaller than the width W of the embedded portion, the length space of the electric drive apparatus 10 occupied by the controller 14 can be reduced. At the same time, the controller 14 is enabled to more fully utilize the width space of the electric drive apparatus 10, so that the length dimension of the electric drive apparatus 10 can be further reduced without changing the width dimension of the electric drive apparatus 10, thereby further reducing the volume of the electric drive apparatus 10.

In some embodiments of the present disclosure, with reference to Fig. 5, in the first direction, the controller 14 has a first distance D from the central axis of the first motor 11, and a ratio of the first distance D to a radius R of the first motor 11 is smaller than or equal to 0.4.

The ratio of the first distance D to the radius R of the first motor 11 can be determined according to practical application requirements, and the smaller the ratio of the first distance D to the radius R of the first motor 11, the greater the embedded depth of the controller 14 with respect to the first motor 11 and the second motor 12. The greater the ratio of the first distance D to the radius R of the first motor 11, the smaller the embedded depth of the controller 14 with respect to the first motor 11 and the second motor 12. The ratio of the first distance D to the radius R of the first motor 11 can be specifically 0.4, 0.3, 0.2, 0.1, etc., which are not specifically limited herein.

By defining the ratio of the first distance D to the radius R of the first motor 11 within the above-described range, the amount of protrusion of the controller 14 in the first direction relative to the first motor 11 or the second motor 12 can be reduced, further reducing the length dimension of the electric drive apparatus 10, thereby further reducing the volume of the electric drive apparatus 10.

In some embodiments of the present disclosure, with reference to Fig. 4, the controller 14 does not protrude from the first motor 11 towards one side in a second direction, and/or the controller 14 does not protrude from the first motor 11 towards the other side in the second direction.

For convenience of description, one side of the controller 14 in the second direction is defined as a top side of the controller 14, and the other side of the controller 14 in the second direction is defined as a bottom side of the controller 14. The top side of the controller 14 refers to a portion of the controller 14 farthest away from the mounting plane 15 of the electric drive apparatus 10, and the bottom side of the controller 14 refers to a portion of the controller 14 closest to the mounting plane 15 of the electric drive apparatus 10.

The top side of the controller 14 does not protrude from the first motor 11, that is, the top side of the controller 14 may be flush with an outer peripheral side of the first motor 11 in the second direction, or may be recessed with respect to the outer peripheral side of the first motor 11 towards the direction of the rotation shaft of the first motor 11. Similarly, the bottom side of the controller 14 does not protrude from the first motor 11, that is, the bottom side of the controller 14 may be flush with an outer peripheral side of the first motor 11 in the second direction, or may be recessed with respect to the outer peripheral side of the first motor 11 towards the direction of the rotation shaft of the first motor 11.

By adopting the above-described technical solution, it can reduce the amount of protrusion of the controller 14 in the second direction with respect to the first motor 11, effectively reducing the height dimension of the electric drive apparatus 10, thereby further reducing the volume of the electric drive apparatus 10.

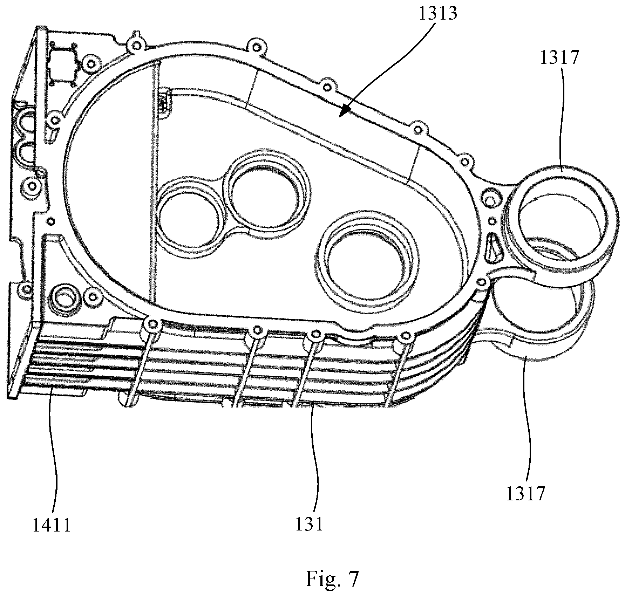

In some embodiments of the present disclosure, referring collectively to Figs. 7-9, the transmission mechanism 13 includes a first shell 131 and the controller 14 includes a second shell 141. The first shell 131 is in contact with the second shell 141.

The first shell 131 is a member for providing an interior mounting environment of the transmission mechanism 13. For example, a transmission component of the transmission mechanism 13 is mounted in the first shell 131. Alternatively, the first shell 131 may be an integrally formed member or an assembled member assembled from a plurality of parts. The material of the first shell 131 may be, but is not limited to, copper, iron, aluminum, stainless steel, aluminum alloy, etc. and is not specifically limited herein.

The second shell 141 is a component for providing an internal mounting environment of the controller 14. For example, the control module 142 of the controller 14 is mounted in the second shell 141. Alternatively, the second shell 141 may be an integrally formed member or an assembled member assembled from a plurality of parts. The material of the second shell 141 may be, but is not limited to, copper, iron, aluminum, stainless steel, aluminum alloy, etc. and is not specifically limited herein.

The first shell 131 and the second shell 141 being in contact means that there is no distance between the first shell 131 and the second shell 141, that is, there is no distance between the controller 14 and the transmission mechanism 13. The first shell 131 may abut against the second shell 141, and the first shell 131 may be integrally connected to the second shell 141. In the case where the first shell 131 is connected to the second shell 141, the first shell 131 may be integrally formed with the second shell 141. For example, the first shell 131 and the second shell 141 may be integrally formed through a casting and forming process. The first shell 131 may be independently connected to the second shell 141. For example, the first shell 131 and the second shell 141 may be connected through a fastener such as a bolt, a rivet, etc.

By adopting the above-described technical solution, it can save space between the transmission mechanism 13 and the controller 14, further reducing the length dimension of the electric drive apparatus 10, thereby further reducing the volume of the electric drive apparatus 10.

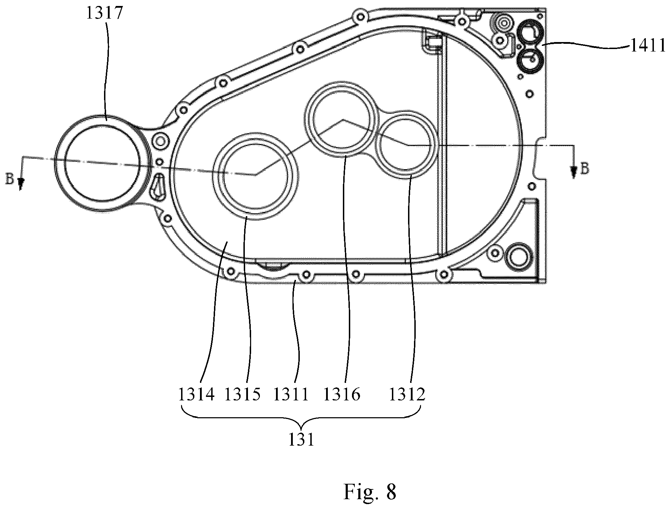

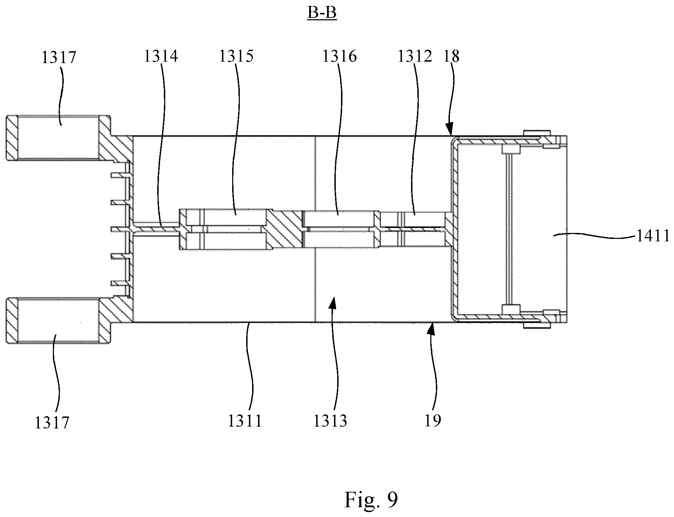

In some embodiments of the present disclosure, with reference to Figs. 8 and 9, the first shell 131 includes a first casing 1311 and a first shaft seat 1312 fixedly connected in the first casing 1311, a power input end of the transmission mechanism 13 is rotatably mounted on the first shaft seat 1312, and the second shell 141 abuts against the first shaft seat 1312.

The first casing 1311 is a main portion of the first shell 131 and serves to provide an interior mounting environment of the transmission mechanism 13. The first shaft seat 1312 serves to provide a mounting space for the power input end of the transmission mechanism 13 and serves to support the power input end of the transmission mechanism 13. In some embodiments, the first shell 131 may further include a support plate 1314 fixedly connected within the first casing 1311, and the first shaft seat 1312 is provided on the support plate 1314. The first casing 1311, the support plate 1314 and the first shaft seat 1312 may be integrally formed. For example, the first casing 1311, the support plate 1314 and the first shaft seat 1312 may be integrally formed by a casting and forming process. The first casing 1311, the support plate 1314 and the first shaft seat 1312 may also be independently connected. For example, the first casing 1311, the support plate 1314 and the first shaft seat 1312 may be separately formed and then welded to each other as a whole.

The abutment of the second shell 141 against the first shaft seat 1312 means that there is no distance between the second shell 141 and the first shaft seat 1312, i.e., there is no distance between the controller 14 and the first shaft seat 1312, so that the distance between the controller 14 and the power input end of the transmission mechanism 13 can be minimized without interference between the controller 14 and the transmission mechanism 13, further reducing the length dimension of the electric drive apparatus 10, thereby further reducing the volume of the electric drive apparatus 10.

In some embodiments of the present disclosure, with reference to Figs. 5 and 9 together, the second shell 141 includes a second casing 1411 abutting against the first shaft seat 1312 and a first cover plate 1412 covering the second casing 1411.

The second casing 1411 is a main portion of the second shell 141 and is used to provide an internal mounting environment of the controller 14. The control module 142 of the controller 14 is provided in the interior mounting environment of the second casing 1411, the second casing 1411 may have an opening, and the control module 142 is fitted into the interior mounting environment via the opening of the second casing 1411.

The first cover plate 1412 covers the opening of the second casing 1411 to isolate the interior mounting environment of the second casing 1411 from an exterior environment of the second casing 1411. The first cover plate 1412 may be integrally connected to the second casing 1411. For example, the first cover plate 1412 may be integrally welded to the second casing 1411 after the first cover plate 1412 covers the second casing 1411. The first cover plate 1412 may be detachably connected to the second casing 1411. For example, the first cover plate 1412 and the second casing 1411 may be connected by fasteners such as bolts, rivets, etc.

By adopting the above-described technical solution, it can minimize the distance between the controller 14 and the power input end of the transmission mechanism 13 without interference between the controller 14 and the transmission mechanism 13, further reducing the length dimension of the electric drive apparatus 10, thereby further reducing the volume of the electric drive apparatus 10.

In some embodiments of the present disclosure, with reference to Fig. 5, the first cover plate 1412 detachably covers a side of the second casing 1411 facing away from the first shell 131.

It should be noted that the detachable connection between the first cover plate 1412 and the second casing 1411 may be, but is not limited to, a fastening connection, a snap connection, a threaded connection, etc. and is not specifically limited herein.

By detachably covering the first cover plate 1412 on the side of the second casing 1411 facing away from the first shell 131, the interference of the first cover plate 1412 with the transmission mechanism 13 can be improved to facilitate the disassembly and assembly of the controller 14.

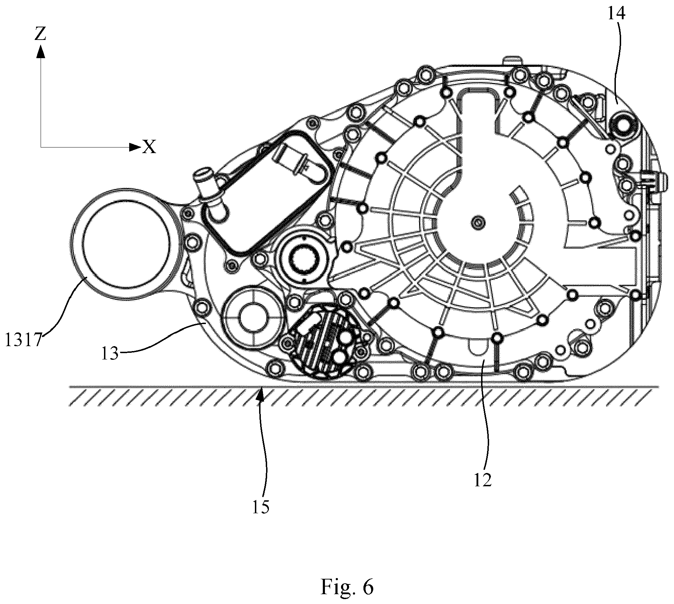

In some embodiments of the present disclosure, with reference to Fig. 6, a connection between a side of the second shell 141 facing away from the first shell 131 and a side of the second shell 141 facing away from a mounting plane 15 of the electric drive apparatus 10 is of a rounded structure.

In other embodiments of the present disclosure, with reference to Fig. 6, the connection between the side of the second shell 141 facing away from the first shell 131 and the side of the second shell 141 facing towards the mounting plane 15 of the electric drive apparatus 10 is of a rounded structure.

In further embodiments of the present disclosure, with reference to Fig. 6, the connection between the side of the second shell 141 facing away from the first shell 131 and the side of the second shell 141 facing away from the mounting plane 15 of the electric drive apparatus 10 is of a rounded structure, and the connection between the side of the second shell 141 facing away from the first shell 131 and the side of the second shell 141 facing towards the mounting plane 15 of the electric drive apparatus 10 is of a rounded structure.

For convenience of description, with reference to Fig. 6, in the case where the controller 14 and the transmission mechanism 13 are arranged in a first direction (i.e., the X direction shown in Fig. 6), a side of the second shell 141 facing away from the first shell 131 in the X direction is defined as a front side of the second shell 141, a side of the second shell 141 facing away from the mounting plane 15 of the electric drive apparatus 10 in the Z direction is defined as an upper side of the second shell 141, and a side of the second shell 141 facing toward the mounting plane 15 of the electric drive apparatus 10 in the Z direction is defined as a lower side of the second shell 141, then, the connection between the side of the second shell 141 facing away from the first shell 131 and the side of the second shell 141 facing away from the mounting plane 15 of the electric drive apparatus 10 is an upper front side of the second shell 141, the side of the second shell 141 facing away from the first shell 131 and the side of the second shell 141 facing towards the mounting plane 15 of the electric drive apparatus 10 is a lower front side of the second shell 141, namely, the upper front side of the second shell 141 is of a rounded structure, and/or the lower front side of the second shell 141 is of a rounded structure.

In the related art, the shell of the controller 14 has a substantially rectangular parallelepiped structure, i.e., corners of the shell of the controller 14 have a substantially right-angled structure, so that the shell of the controller 14 protrudes a large amount relative to the motor, resulting in an increased volume of the electric drive apparatus 10.

By adopting the above-described technical solution, it can reduce the amount of protrusion of the controller 14 with respect to the first motor 11 or the second motor 12, thereby further reducing the volume of the electric drive apparatus 10.

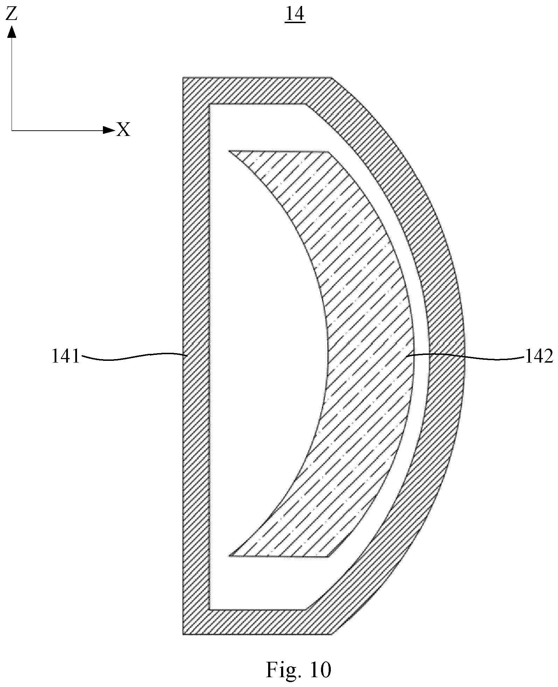

In some embodiments of the present disclosure, with reference to Fig. 10, a side of the second shell 141 facing away from the first shell 131 is of a first arc structure, and a central axis of the first arc structure is parallel to a central axis of the first motor 11. Specifically, the second shell 141 on the side facing away from the first shell 131 has a projection of an arc structure in the second direction, and the second shell 411 on the side facing away from the first shell 131 has a projection of a straight line structure or an arc structure in the Z-direction. The central axis of the first arc structure can be understood as a straight line passing through an arc center of the first arc structure and parallel to the central axis of the first motor 11.

Note that the central axis of the first arc structure may coincide with the central axis of the first motor 11, or the central axis of the first arc structure may not coincide with the central axis of the first motor 11.

In the related art, an outer contour structure of the motor around its central axis has a substantially circular structure at a viewing angle parallel to the central axis. The second shell 141 on the side facing away from the first shell 131 has the first arc structure, such that the outer contour structure of the second shell 141 on the side facing away from the first shell 131 substantially matches the outer contour structure of the first motor 11, effectively reducing the amount of protrusion of the controller 14 relative to the first motor 11, thereby further reducing the volume of the electric drive apparatus 10.

In some embodiments of the present disclosure, the central axis of the first arc structure coincides with the central axis of the first motor 11, and a radius of the first arc structure is equal to a radius of the first motor 11.

For convenience of description below, any plane perpendicular to the axial direction of the first motor 11 is defined as a projection plane. A projection of the side of the second shell 141 facing away from the first shell 131 projects on the projection plane in the axial direction of the first motor 11. The projection substantially coincides with the projection of the outer contour structure of the first motor 11 on the projection plane in the axial direction of the first motor 11.

By adopting the above-described technical solution, an outer contour structure of the second shell 141 on the side facing away from the first shell 131 is adapted to an outer contour structure of the first motor 11 to a maximum extent, and the amount of protrusion of the controller 14 relative to the first motor 11 is further reduced, thereby further reducing the volume of the electric drive apparatus 10.

In some embodiments of the present disclosure, with reference to Fig. 10, the controller 14 further includes a control module 142, the control module 142 has a second arc structure, and a central axis of the second arc structure is parallel to the central axis of the first motor 11.

The control module 142 is a main component of the controller 14 and is used to control the operation of the first motor 11 and the second motor 12. The control module 142 may include components such as a control circuit board, a power device, a direct current input device, a filter device, an alternating current output device, etc. Various components in the control module 142 may be arranged and designed so that the control module 142 integrally forms an arc structure. Alternativly, only some components in the control module 142 may be designed in an arc structure. For example, the control circuit board is in an arc structure.

The central axis of the second arc structure is parallel to the central axis of the first motor 11. The central axis of the second arc structure may coincide with the central axis of the first motor 11. The central axis of the second arc structure may not coincide with the central axis of the first motor 11. It will be appreciated that during assembly, the outer cambered surface of the control module 142 may be opposite to the first arc structure, or an outer cambered surface of the control module 142 may attach to the first arc structure, or an outer cambered surface of the second arc structure may be spaced from the first arc structure.

By adopting the solution described above, an outer contour structure of the control module 142 is substantially adapted to an outer contour structure of the second shell 141 onthe side facing away from the first shell 131, making the overall structure of the controller 14 more compact, thereby further reducing the volume of the electric drive apparatus 10.

In some embodiments of the present disclosure, with reference to Figs. 5 and 9 together, the first shell 131 is connected to the second shell 141 to form a shell body. The shell body has a first connection end 18 on one side in the axial direction of the first motor 11 and a second connection end 19 on the other side in the axial direction of the first motor 11, the first motor 11 directly connected to the first connection end 18, and the second motor 12 is directly connected to the second connection end 19.

Note that the direct connection of the first motor 11 to the first connection end 18 means that the end surface of the first motor 11 facing the shell body is attached to an end surface of the first connection end 18 of the shell body, namely, there is no transition connection between the first motor 11 and the first connection end 18. Similarly, the direct connection of the second motor 12 to the second connection end 19 means that the end surface of the second motor 12 facing the shell body is attached to the end surface of the second connection end 19 of the shell body, namely, there is no transition connection between the second motor 12 and the second connection end 19.

The first motor 11 may be detachably connected to the first connection end 18 of the shell body. For example, the first motor 11 and the first connection end 18 of the shell body are connected by fasteners such as bolts, screws, etc. The first motor 11 may be integrally connected to the first connection end 18 of the shell body. For example, the first motor 11 may be integrally welded to the first connection end 18 of the shell body.

The second motor 12 may be detachably connected to the second connection end 19 of the shell body. For example, the second motor 12 and the second connection end 19 of the shell body are connected by fasteners such as bolts, screws, etc. The second motor 12 may be integrally connected to the second connection end 19 of the shell body. For example, the second motor 12 may be integrally welded to the second connection end 19 of the shell body.

By adopting the above-described technical solution, the transition connection between the first motor 11 and the first connection end 18 of the shell body and the transition connection between the second motor 12 and the second connection end 19 of the shell body are eliminated, effectively reducing the width dimension of the electric drive apparatus 10, thereby further reducing the volume of the electric drive apparatus 10.

In some embodiments of the present disclosure, with reference to Figs. 5 and 9 together, the first motor 11 includes a third shell 111 directly connected to the first connection end 18, and the second motor 12 includes a fourth shell 121 directly connected to the second connection end 19.

The third shell 111 serves to provide an internal mounting environment of the first motor 11. For example, a body of the first motor 11 is mounted in the third shell 111. Alternatively, the third shell 111 may be an integrally formed member or an assembled member assembled from a plurality of parts. The material of the third shell 111 may be, but is not limited to, copper, iron, aluminum, stainless steel, aluminum alloy, etc. and is not specifically limited herein.

The fourth shell 121 serves to provide an interior mounting environment of the second motor 12. For example, the body of the second motor 12 is mounted in the fourth shell 121. Alternatively, the fourth shell 121 may be an integrally formed member or an assembled member assembled from a plurality of parts. The material of the fourth shell 121 may be, but is not limited to, copper, iron, aluminum, stainless steel, aluminum alloy, etc. and is not specifically limited herein.

By adopting the above-described technical solution, the transition connection between the first motor 11 and the first connection end 18 of the shell body and the transition connection between the second motor 12 and the second connection end 19 of the shell body are eliminated, effectively reducing the width dimension of the electric drive apparatus 10, thereby further reducing the volume of the electric drive apparatus 10.

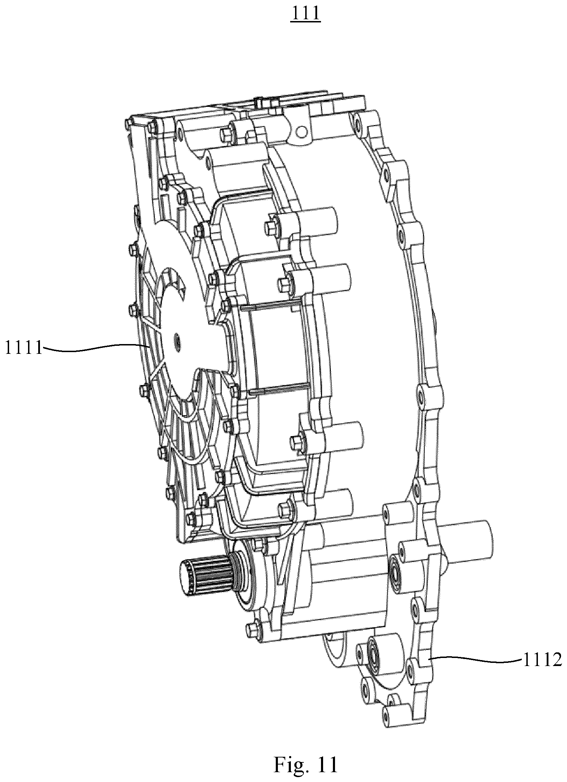

In some embodiments of the present disclosure, with reference to Figs. 7, 9 and 11 together, the shell body has a transmission cavity 1313 passing through the first connection end 18 to form a first cavity port. The third shell 111 includes a third casing 1111 and a second cover plate 1112 connected to the third casing 1111. The third casing 1111 and the second cover plate 1112 are directly connected to the first connection end 18 to cap the first cavity port.

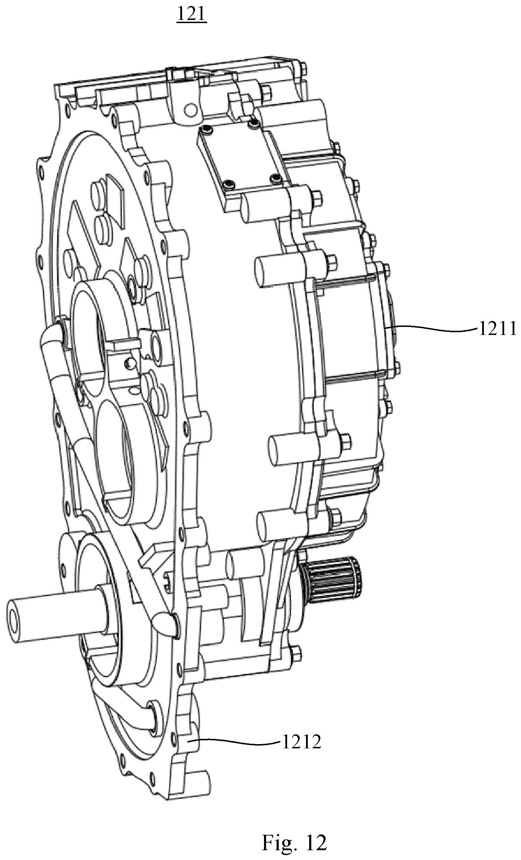

In other embodiments of the present disclosure, with reference to Figs. 7, 9 and 12 together, the shell body has a transmission cavity 1313 passing through the second connection end 19 to form a second cavity port. The fourth shell 121 includes a fourth casing 1211 and a third cover plate 1212 connected to the fourth casing 1211. The fourth casing 1211 and the third cover plate 1212 are directly connected to the second connection end 19 to cap the second cavity port.

In still other embodiments of the present disclosure, with reference to Figs. 7, 9, 11 and 12 together, the shell body has a transmission cavity 1313. The transmission cavity 1313 passes through the first connection end 18 to form a first cavity port. The third shell 111 includes a third casing 1111 and a second cover plate 1112 connected to the third casing 1111. The third casing 1111 and the second cover plate 1112 are directly connected to the first connection end 18 to cap the first cavity port. The transmission cavity 1313 passes through the second connection end 19 to form a second cavity port. The fourth shell 121 includes a fourth casing 1211 and a third cover plate 1212 connected to the fourth casing 1211. The fourth casing 1211 and the third cover plate 1212 are directly connected to the second connection end 19 to cap the second cavity port.

The transmission cavity 1313 is used for accommodating the transmission assembly (assemblies) of the transmission mechanism 13. A quantity of the transmission assembly can be one. The rotation shaft of the first motor 11 and the rotation shaft of the second motor 12 are connected to the transmission assembly. The transmission assembly can be mounted into the transmission cavity 1313 via the first cavity port or the second cavity port. The quantity of the transmission assemblies may also be two. The rotation shaft of the first motor 11 is connected to one transmission assembly and the rotation shaft of the second motor 12 is connected to the other transmission assembly. One transmission assembly may be mounted into the transmission cavity 1313 via the first cavity port and the other transmission assembly may be mounted into the transmission cavity 1313 via the second cavity port. Specifically, in the case where the first shell 131 includes the first casing 1311 and a support plate 1314, an inner wall of the first casing 1311 and an outer wall of the second shell 141 are connected to an edge of the support plate 1314, such that the support plate 1314 divides the transmission cavity 1313 into two cavities, in which one transmission assembly may be mounted into one cavity via the first cavity port and the other transmission assembly may be mounted into the other cavity via the second cavity port.

The third casing 1111 is a main portion of the third shell 111 and serves to provide an interior mounting environment of the first motor 11. The second cover plate 1112 covers the first connection end 18 and cooperates with the third casing 1111 to cap the first cavity port. The third casing 1111 may be integrally formed with the second cover plate 1112. For example, the third casing 1111 and the second cover plate 1112 may be integrally formed through a casting and forming process. The third casing 1111 and the second cover plate 1112 may be independently connected. For example, the third casing 1111 and the second cover plate 1112 may be separately formed and then welded to each other as a whole.

The fourth casing 1211 is a main portion of the fourth shell 121 and serves to provide an interior mounting environment of the second motor 12. The third cover plate 1212 covers the second connection end 19 and cooperates with the fourth casing 1211 to cap the second cavity port. The fourth casing 1211 may be integrally formed with the third cover plate 1212. For example, the fourth casing 1211 and the third cover plate 1212 may be integrally formed through a casting and forming process. The fourth casing 1211 and the third cover plate 1212 may be independently connected. For example, the fourth casing 1211 and the third cover plate 1212 may be separately formed and then welded to each other as a whole.

By integrating the second cover plate 1112 on the third shell 111 and the third cover plate 1212 on the fourth shell 121 using the above-described technical solution, the integration degree of the electric drive apparatus 10 is effectively increased, thereby further reducing the volume of the electric drive apparatus 10.

In some embodiments of the present disclosure, the third shell 111 includes a third casing 1111 and a first mount bracket connected to the third casing 1111.

In other embodiments of the present disclosure, the fourth shell 121 includes a fourth casing 1211 and a second mount bracket connected to the fourth casing 1211.

In further embodiments of the present disclosure, the third shell 111 includes a third casing 1111 and a first mount bracket connected to the third casing 1111, and the fourth shell 121 includes a fourth casing 1211 and a second mount bracket connected to the fourth casing 1211.

The first mount bracket and the second mount bracket are components that are configured to be connected to the vehicle body 200 of the vehicle 1000. The first mount bracket can be integrally formed with the third casing 1111. For example, the first mount bracket and the third casing 1111 are integrally formed through a casting and forming process. The first mount bracket can be independently connected to the third casing 1111. For example, the first mount bracket and the third casing 1111 are separately formed and then welded to each other as a whole. Similarly, the second mount bracket can be integrally formed with the fourth casing 1211. For example, the second mount bracket and the fourth casing 1211 are integrally formed through a casting and forming process. The second mount bracket can be independently connected to the fourth casing 1211. For example, the second mount bracket and the fourth casing 1211 are separately formed and then welded together as a whole.

In some embodiments, with reference to Figs. 3 to 9 together, the electric drive apparatus 10 may further include a third mount bracket 1317 configured to be connected to the vehicle body 200 of the vehicle 1000, and the third mount bracket 1317 is connected to the shell body. For example, the third mount bracket 1317 is connected to the first shell 131, the first and second mount brackets are provided on one side of the electric drive apparatus 10 in the first direction, and the third mount bracket 1317 is provided on the other side of the electric drive apparatus 10 in the first direction.

By integrating the first mount bracket on the third shell 111 and the first mount bracket on the fourth shell 121 using the above-described technical solution, the integration degree of the electric drive apparatus 10 is effectively increased, thereby further reducing the volume of the electric drive apparatus 10.

In some embodiments of the present disclosure, the first shell 131 is integrally formed with the second shell 141.

For example, the first shell 131 and the second shell 141 are integrally formed through a casting and forming process.

By adopting the above-described technical solution, the rigidity of the electric drive apparatus 10 is effectively improved, while the production process of the electric drive apparatus 10 is effectively simplified, thereby reducing the production cost of the electric drive apparatus 10.

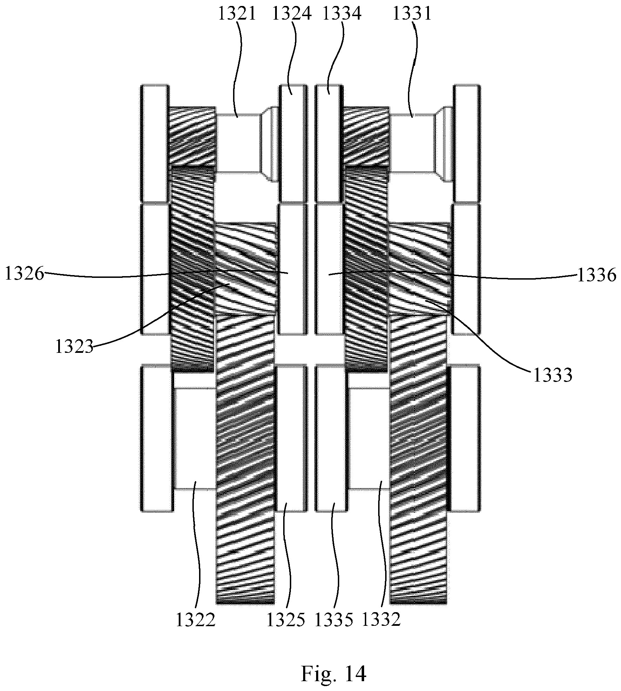

In some embodiments of the present disclosure, with reference to Figs. 5 and 14 together, the transmission mechanism 13 includes a first transmission assembly 132 and a second transmission assembly 133. The first transmission assembly 132 includes a first power input shaft 1321 and a first power output shaft 1322 in a transmission connection to the first power input shaft 1321. The second transmission assembly 133 includes a second power input shaft 1331 and a second power output shaft 1332 in a transmission connection to the second power input shaft 1331. The first power input shaft 1321 is connected to a rotation shaft of the first motor 11, and the second power input shaft 1331 is connected to a rotation shaft of the second motor 12.

The first power input shaft 1321 is connected to the rotation shaft of the first motor 11, and the second power input shaft 1331 is connected to the rotation shaft of the second motor 12. In other words, the first power input shaft 1321 and the second power input shaft 1331 together constitute a power input end of the transmission mechanism 13. In the case where the first shell 131 includes the first shaft seat 1312, the first power input shaft 1321 and the second power input shaft 1331 are rotatably mounted on the first shaft seat 1312. In some embodiments, with reference to Fig. 14, the first transmission assembly 132 may further include a first bearing 1324. The first bearing 1324 is sheathed on the first power input shaft 1321 and is mounted on the first shaft seat 1312. There may be two first bearings 1324. The two first bearings 1324 are provided at two ends of the first power input shaft 1321. The second transmission assembly 133 may further include a second bearing 1334. The second bearing 1334 is sheathed on the second power input shaft 1331 and is mounted on the first shaft seat 1312. There may be two second bearings 1334. The two second bearings 1334 are provided at two ends of the second power input shaft 1331.

It is understood that the first power output shaft 1322 is connected to a wheel of the vehicle 1000 on one side, the second power output shaft 1332 is connected to a wheel of the vehicle 1000 on the other side. For example, the first power output shaft 1322 is connected to a left front wheel of the vehicle 1000, and the second power output shaft 1332 is connected to a right front wheel of the vehicle 1000. In other words, the first power output shaft 1322 and the second power output shaft 1332 together constitute the power output end of the transmission mechanism 13. In some embodiments, with reference to Figs. 8 and 9 together, the first shell 131 may further include a second shaft seat 1315. The first power output shaft 1322 and the second power output shaft 1332 are rotatably mounted on the second shaft seat 1315. In some embodiments, with reference to Fig. 14, the first transmission assembly 132 may further include a third bearing 1325. The third bearing 1325 is sheathed on the first power output shaft 1322 and mounted on the second shaft seat 1315. There may be two third bearings 1325. The two third bearings 1325 are provided at two ends of the first power output shaft 1322. The second transmission assembly 133 may further include a fourth bearing 1335. The fourth bearing 1335 is sheathed on the second power output shaft 1332 and is mounted on the second shaft seat 1315. There may be two fourth bearings 1335. The two fourth bearings 1335 are provided at two ends of the second power output shaft 1332.

The transmission connection between the first power input shaft 1321 and the first power output shaft 1322 means that the torque of the first power output shaft 1322 can be transferred to the first power output shaft 1322 via a mechanical transmission mechanism, which can be, but is not limited to, a gear transmission mechanism, a belt transmission mechanism, a steel belt transmission mechanism, etc. and is not particularly limited herein.

Similarly, the transmission connection between the second power input shaft 1331 and the second power output shaft 1332 means that the torque of the second power output shaft 1332 can be transferred to the second power output shaft 1332 via a mechanical transmission mechanism, which can be, but is not limited to, a gear transmission mechanism, a belt transmission mechanism, a steel belt transmission mechanism, etc. and is not particularly limited herein.

By adopting the above-described technical solution, it is effectively achieved that the power output by the first motor 11 and the power output by the second motor 12 are output outward.

In some embodiments of the present disclosure, with reference to Fig. 14, a first end surface of the first power input shaft 1321 is flush with a first end surface of the first power output shaft 1322, and a second end surface of the first power input shaft 1321 is flush with a second end surface of the first power output shaft 1322.

In other words, the first end surface of the first power input shaft 1321 and the first end surface of the first power output shaft 1322 are located on the same side of the first transmission assembly 132 and on the same plane, and similarly, the second end surface of the first power input shaft 1321 and the second end surface of the first power output shaft 1322 are located on the same side of the first transmission assembly 132 and on the same plane.

By adopting the above-described technical solution, the arrangement of the first transmission assembly 132 is facilitated by the planar configuration of the first transmission assembly 132 in parallel on the opposite sides of the axial direction of the first motor 11, so that the overall structure of the electric drive apparatus 10 becomes more compact, thereby further reducing the volume of the electric drive apparatus 10.

In some embodiments of the present disclosure, with reference to Fig. 14, the first transmission assembly 132 further includes a first transition shaft 1323. The first transition shaft 1323 is in a transmission connection between the first power input shaft 1321 and the first power output shaft 1322. A first end surface of the first power input shaft 1321, a first end surface of the first transition shaft 1323 and a first end surface of the first power output shaft 1322 are flush with each other, and a second end surface of the first power input shaft 1321, a second end surface of the first transition shaft 1323 and a second end surface of the first power output shaft 1322 are flush with each other.

In other words, the first end surface of the first power input shaft 1321, the first end surface of the first transition shaft 1323, and the first end surface of the first power output shaft 1322 are located on the same side of the first transmission assembly 132 and on the same plane, and similarly, the second end surface of the first power input shaft 1321, the second end surface of the first transition shaft 1323, and the second end surface of the first power output shaft 1322 are located on the same side of the first transmission assembly 132 and on the same plane.

The transmission connection between the first power input shaft 1321 and the first transition shaft 1323 means that the torque of the first power output shaft 1322 can be transferred to the first transition shaft 1323 via a mechanical transmission mechanism, and similarly, the transmission connection between the first transition shaft 1323 and the first power output shaft 1322 means that the torque of the first transition shaft 1323 can be transferred to the first power output shaft 1322 via a mechanical transmission mechanism. The mechanical transmission mechanism can be, but is not limited to, a gear transmission mechanism, a belt transmission mechanism, a steel belt transmission mechanism, etc. and is not particularly limited here.

In some embodiments, with reference to Figs. 8 and 9 together, the first shell 131 may further include a third shaft seat 1316. The first transition shaft 1323 is rotatably mounted on the third shaft seat 1316. In some embodiments, with reference to Fig. 14, the first transmission assembly 132 may further include a fifth bearing 1326. The fifth bearing 1326 is sheathed on the first transition shaft 1323 and mounted on the third shaft seat 1316. There may be two fifth bearings 1326. The two fifth bearings 1326 are respectively provided at two ends of the first transition shaft 1323.

It should be noted that a quantity of the first transition shafts 1323 may be multiple, and the quantity of the first transition shafts 1323 may be two, three, four, etc. depending on the requirements of practical applications, which are not specifically limited herein.

By adopting the above-described technical solution, the arrangement of the first transmission assembly 132 is facilitated by the planar configuration of the first transmission assembly 132 in parallel on the opposite sides of the axial direction of the first motor 11, so that the overall structure of the electric drive apparatus 10 becomes more compact, thereby further reducing the volume of the electric drive apparatus 10.

In some embodiments of the present disclosure, with reference to Fig. 14, the first end surface of the second power input shaft 1331 is flush with the first end surface of the second power output shaft 1332, and the second end surface of the second power input shaft 1331 is flush with the second end surface of the second power output shaft 1332.

In other words, the first end surface of the second power input shaft 1331 and the first end surface of the second power output shaft 1332 are located on the same side of the second transmission assembly 133 and on the same plane, and similarly, the second end surface of the second power input shaft 1331 and the second end surface of the second power output shaft 1332 are located on the same side of the second transmission assembly 133 and on the same plane.

By adopting the above-described technical solution, the arrangement of the second transmission assembly 133 is facilitated by the planar configuration of the second transmission assembly 133 in parallel on the opposite sides of the axial direction of the first motor 11, so that the overall structure of the electric drive apparatus 10 becomes more compact, thereby further reducing the volume of the electric drive apparatus 10.

In some embodiments of the present disclosure, with reference to Fig. 14, the second transmission assembly 133 further includes a second transition shaft 1333. The second transition shaft 1333 is in a transmission connection between the second power input shaft 1331 and the second power output shaft 1332. A first end surface of the second power input shaft 1331, a first end surface of the second transition shaft 1333 and a first end surface of the second power output shaft 1332 are flush with each other, and a second end surface of the second power input shaft 1331, a second end surface of the second transition shaft 1333 and a second end surface of the second power output shaft 1332 are flush with each other.

In other words, the first end surface of the second power input shaft 1331, the first end surface of the second transition shaft 1333, and the first end surface of the second power output shaft 1332 are located on the same side of the second transmission assembly 133 and on the same plane, and similarly, the second end surface of the second power input shaft 1331, the second end surface of the second transition shaft 1333, and the second end surface of the second power output shaft 1332 are located on the same side of the second transmission assembly 133 and on the same plane.

The transmission connection between the second power input shaft 1331 and the second transition shaft 1333 means that the torque of the second power output shaft 1332 can be transferred to the second transition shaft 1333 via a mechanical transmission mechanism, and similaly, the transmission connection between the second transition shaft 1333 and the second power output shaft 1332 means that the torque of the second transition shaft 1333 can be transferred to the second power output shaft 1332 via a mechanical transmission mechanism. The mechanical transmission mechanism can be, but is not limited to, a gear transmission mechanism, a belt transmission mechanism, a steel belt transmission mechanism, etc. and is not particularly limited here.

In some embodiments, with reference to Figs. 8 and 9 together, the first shell 131 may further include a third shaft seat 1316. The second transition shaft 1333 is rotatably mounted on the third shaft seat 1316. In some embodiments, with reference to Fig. 14, the second transmission assembly 133 may further include a sixth bearing 1336. The sixth bearing 1336 is sheathed on the second transition shaft 1333 and mounted on the third shaft seat 1316. There may be two sixth bearings 1336. The two sixth bearings 1336 are respectively provided at two ends of the second transition shaft 1333.

It should be noted that a quantity of the second transition shafts 1333 may be multiple, and the quantity of the second transition shafts 1333 may be two, three, four, etc. depending on the requirements of practical applications, which are not specifically limited herein.

By adopting the above-described technical solution, the arrangement of the second transmission assembly 133 is facilitated by the planar configuration of the second transmission assembly 133 in parallel on the opposite sides of the axial direction of the first motor 11, so that the overall structure of the electric drive apparatus 10 becomes more compact, thereby further reducing the volume of the electric drive apparatus 10.

In some embodiments of the present disclosure, with reference to Fig. 14, the first transmission assembly 132 includes a first power input shaft 1321, a first power output shaft 1322, and a first transition shaft 1323. The first transition shaft 1323 is in a transmission connection between the first power input shaft 1321 and the first power output shaft 1322. A first end surface of the first power input shaft 1321, a first end surface of the first transition shaft 1323 and a first end surface of the first power output shaft 1322 are flush with each other, and a second end surface of the first power input shaft 1321, a second end surface of the first transition shaft 1323 and a second end surface of the first power output shaft 1322 are flush with each other. The second transmission assembly 133 includes a second power input shaft 1331, a second power output shaft 1332 and a second transition shaft 1333. The second transition shaft 1333 is in a transmission connection between the second power input shaft 1331 and the second power output shaft 1332. The first end surface of the second power input shaft 1331, the first end surface of the second transition shaft 1333 and the first end surface of the second power output shaft 1332 are flush with each other, and the second end surface of the second power input shaft 1331, the second end surface of the second transition shaft 1333 and the second end surface of the second power output shaft 1332 are flush with each other.

In some embodiments of the present disclosure, with reference to Figs. 5 and 14 together, the first transmission assembly 132 has a structure same as a structure of the second transmission assembly 133. The first transmission assembly 132 and the second transmission assembly 133 are arranged along the axial direction of the first motor 11 in a parallel way.

The first transmission assembly 132 having a structure same as the structure of the second transmission assembly 133 means that the type of the first transmission assembly 132 is the same as that of the second transmission assembly 133, namely, the first transmission assembly 132 and the second transmission assembly 133 can be assembled and produced on the same production line.

By using the above-described technical solution, only one type of transmission assembly needs to be produced, the cost of molding is reduced, thereby reducing the production cost of the electric drive apparatus 10.

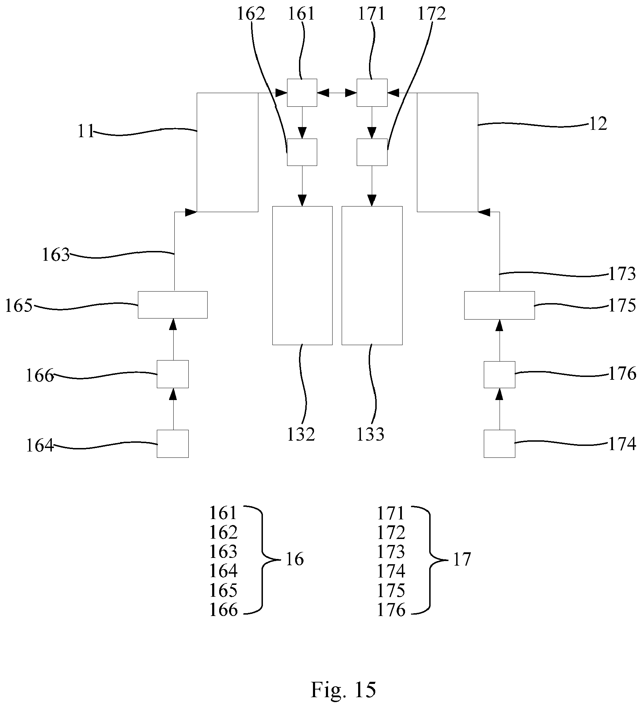

In some embodiments of the present disclosure, with reference to Fig. 15, the electric drive apparatus 10 further includes a first cooling mechanism 16 and a second cooling mechanism 17. The transmission mechanism 13 includes a first transmission assembly 132 and a second transmission assembly 133. The first cooling mechanism 16 is configured to sequentially supply a cooling medium to the first motor 11 and the first transmission assembly 132. The second cooling mechanism 17 is configured to sequentially supply a cooling medium to the second motor 12 and the second transmission assembly 133. The first cooling mechanism 16 and the second cooling mechanism 17 are in communication between a cooling medium outlet of the first motor 11 and a cooling medium outlet of the second motor 12.

The first cooling mechanism 16 is a mechanism for supplying the cooling medium to the first motor 11 and the first transmission assembly 132. Specifically, with reference to Fig. 15, the first cooling mechanism 16 may include a first liquid inlet pipe 163 and a first power pump 164. The first liquid inlet pipe 163 has one end connected to a liquid outlet of the first power pump 164, and the other end connected to the cooling medium inlet of the first motor 11. The first inlet pipe 163 serves to provide a flow path of the cooling medium. The first power pump 164 serves to increase the flow power of the cooling medium. In some embodiments, with reference to Fig. 15, the first cooling mechanism 16 may further include a first heat exchanger 165 provided on the first liquid inlet pipe 163 and configured to absorb heat from the cooling medium. As can be appreciated, after a high temperature cooling medium enters the first heat exchanger 165, the first heat exchanger 165 absorbs heat of the high temperature cooling medium to convert the high temperature cooling medium into a low temperature cooling medium, and the low temperature cooling medium enters the first motor 11 to cool the first motor 11. In some embodiments, the first cooling mechanism 16 may further include a first filter 166 provided on the first liquid inlet pipe 163 and configured to filter impurities in the cooling medium. The first filter 166 may be provided on an inlet side or an outlet side of the first power pump 164, for example, between the first power pump 164 and the first heat exchanger 165.

The second cooling mechanism 17 is a mechanism for supplying the cooling medium to the second motor 12 and the second transmission assembly 133. Specifically, with reference to Fig. 15, the second cooling mechanism 17 may include a second liquid inlet pipe 173 and a second power pump 174. The second liquid inlet pipe 173 has one end connected to a liquid outlet of the second power pump 174, and the other end connected to the cooling medium inlet of the second motor 12. The second inlet pipe 173 serves to provide a flow path of the cooling medium, and the second power pump 174 serves to increase the flow power of the cooling medium. In some embodiments, with reference to Fig. 15, the second cooling mechanism 17 may further include a second heat exchanger 175 provided on the second liquid inlet pipe 173 and configured to absorb heat from the cooling medium. As can be appreciated, after the high temperature cooling medium enters the second heat exchanger 175, the second heat exchanger 175 absorbs heat of the high temperature cooling medium to convert the high temperature cooling medium into a low temperature cooling medium, and the low temperature cooling medium enters the second motor 12 to cool the second motor 12. In some embodiments, the second cooling mechanism 17 may further include a second filter 176 provided on the second liquid inlet pipe 173 and configured to filter impurities in the cooling medium. The second filter 176 may be provided on an inlet side or an outlet side of the second power pump 174, for example, between the second power pump 174 and the second heat exchanger 175.

In some embodiments, with reference to Fig. 15, the first cooling mechanism 16 further includes a first current collector 161 connected to the cooling medium outlet of the first motor 11, and the second cooling mechanism 17 further includes a second current collector 171 connected to the cooling medium outlet of the second motor 12. Adjacent ends of the first current collector 161 and the second current collector 171 are in communication with each other.

The first current collector 161 refers to a member connected to the cooling medium outlet of the first motor 11 to receive the cooling medium flowing out from the cooling medium outlet of the first motor 11. Alternatively, the first current collector 161 may be, but is not limited to, a current collector tube, a current collector box, or the like, and is not specifically limited herein.

The second current collector 171 refers to a member connected to the cooling medium outlet of the second motor 12 to receive the cooling medium flowing out from the cooling medium outlet of the second motor 12. Alternatively, the second current collector 171 may be, but is not limited to, a current collector tube, a current collector box, or the like, and is not specifically limited herein.

In some embodiments, the first current collector 161 and the second current collector 171 may be integrally formed. For example, the first current collector 161 and the second current collector 171 are integrally formed by an injection molding process. Of course, the first current collector 161 and the second current collector 171 may be independently connected. For example, adjacent ends of the first current collector 161 and the second current collector 171 may be threadedly connected to each other.

In some embodiments, in the case where the first shell 131 includes the first casing 1311 and the support plate 1314, the support plate 1314 is defined with a connection passage which is in communication with the first current collector 161 and the second current collector 171.

In some embodiments, with reference to Fig. 15, the first cooling mechanism 16 further includes a first shunt 162 in a communication between the first current collector 161 and the first transmission assembly 132, and the second cooling mechanism 17 further includes a second shunt 172 in communication between the second current collector 171 and the second transmission assembly 133.

The first shunt 162 is a member for guiding the cooling medium in the first current collector 161 to the first transmission assembly 132. Alternatively, the first shunt 162 may be, but is not limited to, a shunt tube, a shunt plate, etc. and is not specifically limited herein.

The second shunt 172 is a member for guiding the cooling medium in the second current collector 171 to the second transmission assembly 133. Alternatively, the second shunt 172 may be, but is not limited to, a shunt tube, a shunt plate, etc. and is not specifically limited herein.

Of course, in other embodiments, instead of providing the first shunt 162 and the second shunt 172, the cooling medium may be directed to the first transmission assembly 132 and the second transmission assembly 133 directly through the first current collector 161 and the second current collector 171, for example, by providing a first outlet hole in the first current collector 161 through which the cooling medium in the first current collector 161 falls onto the first transmission assembly 132, and providing a second outlet hole in the second current collector 171 through which the cooling medium in the second current collector 171 falls onto the second transmission assembly 133.

By adopting the above-described technical solution, the first cooling mechanism 16 and the second cooling mechanism 17 are in communication between the cooling medium outlet of the first motor 11 and the cooling medium outlet of the second motor 12, so as to realize that the cooling medium discharged from the cooling medium outlet of the first motor 11 and the cooling medium discharged from the cooling medium outlet of the second motor 12 are complementary, and particularly in the case where the electric drive apparatus 10 is inclined, it can be ensured that the amount of the cooling medium supplied to the first transmission assembly 132 and the amount of the cooling medium supplied to the second transmission assembly 133 become more balanced, so that the first transmission assembly 132 and the second transmission assembly 133 are well cooled and lubricated. The utilization rate of the cooling medium is improved and the loss is reduced.

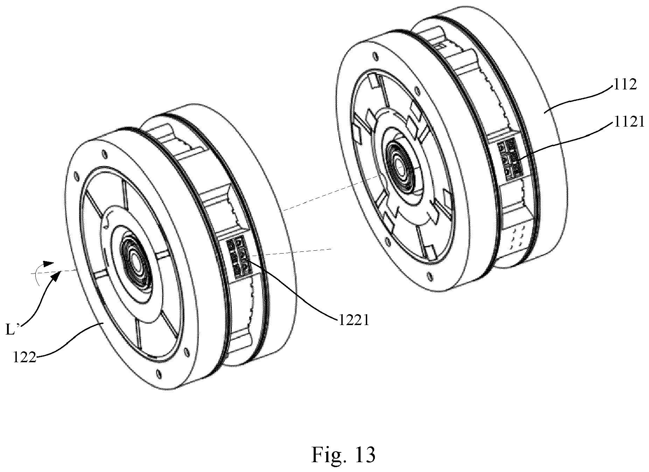

In some embodiments of the present disclosure, with reference to Fig. 13, the first motor 11 includes a first body 112, the second motor 12 includes a second body 122, the first body 112 has a structure same as a structure of the second body 122, and a rotation shaft leading-out side of the first motor 11 is opposite to a rotation shaft leading-out side of the second motor 12.

The first body 112, which is a main portion of the first motor 11 and serves to convert electric power supplied from the battery 20 into mechanical power, is mounted in the interior mounting environment of the third shell 111. The rotation shaft leading-out side of the first body 112 refers to a side of the first body 112 for providing an exposed space of a rotor shaft.

The second body 122, which is a main portion of the second motor 12 and serves to convert electric power supplied from the battery 20 into mechanical power, is mounted in the interior mounting environment of the fourth shell 121. The rotation shaft leading-out side of the second body 122 refers to a side of the second body 122 for providing an exposed space of the rotor shaft.

The first body 112 having a structure same as the structure of the second body 122 means that the type of the first body 112 is the same as that of the second body 122, namely, the second body 122 and the second body 122 can be assembled and produced on the same production line. With reference to Fig. 13, during the assembling operation of the electric drive apparatus 10, the second motor 12 is assembled flipped 180 deg. with respect to the first motor 11, specifically rotated 180 deg. in a plane perpendicular to a flipping line L' with the flipping line L' in Fig. 13 as an axis, so that the rotation shaft leading-out side of the first motor 11 is opposite to the rotation shaft leading-out side of the second motor 12.

By using the above-described technical solution, only one type of motor body needs to be produced, the cost of molding is reduced, thereby reducing the production cost of the electric drive apparatus 10.

In some embodiments of the present disclosure, with reference to Fig. 13, the first body 112 has a first wire connection portion 1121, and the second body 122 has a second wire connection portion 1221, and an orientation of the first wire connection portion 1121 is the same as an orientation of the second wire connection portion 1221.

The first connection portion 1121 is a part of the first body 112 for electrically connecting to the controller 14, and similarly, the second connection portion 1221 is a part of the second body 122 for electrically connecting to the controller 14. The orientation of the first wire connection portion 1121 being the same as the orientation of the second wire connection portion 1221 means that the distribution direction of the first wire connection portion 1121 and the second wire connection portion 1221 is parallel to the axial direction of the first motor 11. Of course, there may be a small deviation in the orientation of the first wire connection portion 1121 from the orientation of the second wire connection portion 1221 in consideration of a reasonable assembly error.

By adopting the above-described technical solution, the wire connection operation of the first motor 11 and the second motor 12 is facilitated, while the wire connection structure of the electric drive apparatus 10 is optimized.

In some embodiments of the present disclosure, the first motor 11 is an axial magnetic flux motor; and/or the second motor 12 is an axial magnetic flux motor.

The axial dimension of the axial magnetic flux motor is smaller than that of the radial magnetic flux motor, and by adopting the solution described above, the width dimension of the electric drive apparatus 10 is effectively reduced, thereby further reducing the volume of the electric drive apparatus 10.

With reference to Figs. 1 and 3 to 5, the present embodiment also provides an electric drive apparatus 10 for driving a vehicle 1000, including a first motor 11, a second motor 12, and a controller 14. The second motor 12 is spaced apart from the first motor 11 along an axial direction of the first motor 11. The controller 14 is provided between the first motor 11 and the second motor 12. The controller 14 is provided on a front side or a rear side of a rotation shaft of the first motor 11 in a forward direction of the vehicle 1000.

For example, when the X direction shown in Fig. 3 is the forward direction of the vehicle 1000, the controller 14 is provided on the front side of the vehicle 1000 of the rotation shaft of the first motor 11.

The embodiment of the present disclosure provides the electric drive apparatus 10 by disposing the controller 14 between the first motor 11 and the second motor 12 and disposing the controller 14 on the front side or the rear side of the rotation shaft of the first motor 11 in the forward direction of the vehicle 1000, so that the space of the rotation shaft of the first motor 11 on the front side or the space of the rotation shaft of the first motor 11 on the rear side is effectively used, thereby effectively reducing the volume of the electric drive apparatus 10.

With reference to Fig. 1, an embodiment of the present disclosure further provides an electric drive system 100 including a battery 20 and the electric drive apparatus 10 of any of the embodiments described above 100, the battery 20 being electrically connected to the electric drive apparatus.

An embodiment of the present disclosure provides an electric drive system 100 that effectively reduces the volume of the electric drive system 100 by adopting the above-described electric drive apparatus 10 in any above embodiment.

With reference to Fig. 1, an embodiment of the present disclosure further provides an electrical device including the above-described electric drive system 100.

An embodiment of the present disclosure provides an electrical device that effectively improves space utilization of the electrically powered device by adopting the above-described electric drive system 100.

The foregoing description is merely preferred embodiments of the present disclosure, and is not intended to limit the present disclosure. Any modifications, equivalents, improvements, etc. within the spirit and principles of the present disclosure are intended to be included within the scope of the present disclosure.

The specification of the present application is supplemented by the following numbered clauses, which should not be taken to be claims.
Clause 1. An electric drive apparatus, comprising:
   a first motor;
   a second motor spaced apart from the first motor along an axial direction of the first motor;
   a transmission mechanism provided between the first motor and the second motor;
   a controller provided between the first motor and the second motor, at least part of the controller and at least part of the transmission mechanism being provided on opposite sides of a rotation shaft of the first motor.
Clause 2. The electric drive apparatus according to clause 1, wherein the rotation shaft of the first motor and a rotation shaft of the second motor are connected to a power input end of the transmission mechanism, and wherein at least part of the controller is provided on a side of the rotation shaft of the first motor facing away from a power output end of the transmission mechanism.
Clause 3. The electric drive apparatus according to clause 2, wherein the controller and the transmission mechanism are arranged along a first direction that is parallel to a mounting plane of the electric drive apparatus and perpendicular to the axial direction of the first motor.
Clause 4. The electric drive apparatus according to clause 3, wherein the controller has an embedded portion provided between the first motor and the second motor, the embedded portion having a dimension in the first direction smaller than a dimension of the embedded portion in a second direction, and the second direction being perpendicular to the axial direction of the first motor and the first direction.
Clause 5. The electric drive apparatus according to clause 3, wherein the controller has an embedded portion provided between the first motor and the second motor, the embedded portion having a dimension in the first direction smaller than a dimension of the embedded portion in the axial direction of the first motor.
Clause 6. The electric drive apparatus according to any one of clauses 3 to 5, wherein in the first direction, the controller has a first spacing from a central axis of the first motor, a ratio of the first spacing to a radius of the first motor being smaller than or equal to 0.4.
Clause 7. The electric drive apparatus according to clause 3, wherein
   the controller does not protrude from the first motor towards one side in a second direction; and/or
   the controller does not protrude from the first motor towards the other side in the second direction,
   wherein the second direction is perpendicular to the axial direction of the first motor and the first direction.
Clause 8. The electric drive apparatus according to any one of clauses 1 to 7, wherein the transmission mechanism comprises a first shell and the controller comprises a second shell, the first shell being in contact with the second shell.
Clause 9. The electric drive apparatus according to clause 8, wherein the first shell comprises a first casing and a first shaft seat fixedly connected in the first casing, the transmission mechanism having a power input end rotatably mounted on the first shaft seat, and the second shell abutting against the first shaft seat.
Clause 10. The electric drive apparatus according to clause 9, wherein the second shell comprises a second casing abutting agaisnt the first shaft seat and a first cover plate covering the second casing.
Clause 11. The electric drive apparatus according to clause 10, wherein the first cover plate detachably covers a side of the second casing facing away from the first shell.
Clause 12. The electric drive apparatus according to any one of clauses 8 to 11, wherein
   a connection between a side of the second shell facing away from the first shell and a side of the second shell facing away from a mounting plane of the electric drive apparatus is of a rounded structure; and/or
   a connection between a side of the second shell facing away from the first shell and a side of the second shell facing towards a mounting plane of the electric drive apparatus is of a rounded structure.
Clause 13. The electric drive apparatus according to any one of clauses 8 to 11, wherein a side of the second shell facing away from the first shell is of a first arc structure, and a central axis of the first arc structure is parallel to a central axis of the first motor.
Clause 14. The electric drive apparatus according to clause 13, wherein the central axis of the first arc structure coincides with the central axis of the first motor, and a radius of the first arc structure is equal to a radius of the first motor.
Clause 15. The electric drive apparatus according to clause 13 or 14, wherein the controller further comprises a control module, the control module has a second arc structure, and a central axis of the second arc structure is parallel to the central axis of the first motor.
Clause 16. The electric drive apparatus according to any one of clauses 8 to 15, wherein the first shell and the second shell are connected to form a shell body, the shell body having a first connection end on one side of the first motor in the axial direction and a second connection end on the other side of the first motor in the axial direction, wherein the first motor is directly connected to the first connection end and the second motor is directly connected to the second connection end.
Clause 17. The electric drive apparatus according to clause 16, wherein the first motor comprises a third shell directly connected to the first connection end, and wherein the second motor comprises a fourth shell directly connected to the second connection end.
Clause 18. The electric drive apparatus according to clause 17, wherein
   the shell body has a transmission cavity;
   the transmission cavity passes through the first connection end to form a first cavity port, wherein the third shell comprises a third casing and a second cover plate connected to the third casing, the third casing and the second cover plate being directly connected to the first connection end to cap the first cavity port; and/or
   the transmission cavity passes through the second connection end to form a second cavity port, wherein the fourth shell comprises a fourth casing and a third cover plate connected to the fourth casing, the fourth casing and the third cover plate being directly connected to the second connection end to cap the second cavity port.
Clause 19. The electric drive apparatus according to clause 17, wherein
   the third shell comprises a third casing and a first mount bracket connected to the third casing; and/or
   the fourth shell comprises a fourth casing and a second mount bracket connected to the fourth casing.
Clause 20. The electric drive apparatus according to any one of clauses 8 to 19, wherein the first shell is integrally formed with the second shell.
Clause 21. The electric drive apparatus according to any one of clauses 1 to 20, wherein the transmission mechanism comprises a first transmission assembly and a second transmission assembly, the first transmission assembly comprising a first power input shaft and a first power output shaft in a transmission connection to the first power input shaft, the second transmission assembly comprising a second power input shaft and a second power output shaft in a transmission connection to the second power input shaft, the first power input shaft being connected to the rotation shaft of the first motor, and the second power input shaft being connected to a rotation shaft of the second motor.
Clause 22. The electric drive apparatus according to clause 21, wherein a first end surface of the first power input shaft is flush with a first end surface of the first power output shaft, and wherein a second end surface of the first power input shaft is flush with a second end surface of the first power output shaft.
Clause 23. The electric drive apparatus according to clause 21, wherein the first transmission assembly further comprises a first transition shaft in a transmission connection between the first power input shaft and the first power output shaft, wherein a first end surface of the first power input shaft, a first end surface of the first transition shaft and a first end surface of the first power output shaft are flush with each other, and wherein a second end surface of the first power input shaft, a second end surface of the first transition shaft and a second end surface of the first power output shaft are flush with each other.
Clause 24. The electric drive apparatus according to any one of clauses 21 to 23, wherein a first end surface of the second power input shaft is flush with a first end surface of the second power output shaft, and wherein a second end surface of the second power input shaft is flush with a second end surface of the second power output shaft.
Clause 25. The electric drive apparatus according to any one of clauses 21 to 23, wherein the second transmission assembly further comprises a second transition shaft in a transmission connection between the second power input shaft and the second power output shaft, a first end surface of the second power input shaft, a first end surface of the second transition shaft and a first end surface of the second power output shaft being flush with each other, and a second end surface of the second power input shaft, a second end surface of the second transition shaft and a second end surface of the second power output shaft being flush with each other.
Clause 26. The electric drive apparatus according to any one of clauses 21 to 25, wherein the first transmission assembly has a structure same as a structure of the second transmission assembly, and wherein the first transmission assembly and the second transmission assembly are arranged along the axial direction of the first motor in a parallel way.
Clause 27. The electric drive apparatus according to any one of clauses 1 to 20, further comprising a first cooling mechanism and a second cooling mechanism, wherein:
   the transmission mechanism comprises a first transmission assembly and a second transmission assembly;
   the first cooling mechanism is configured to sequentially supply a cooling medium to the first motor and the first transmission assembly;
   the second cooling mechanism is configured to sequentially supply a cooling medium to the second motor and the second transmission assembly; and
   the first cooling mechanism and the second cooling mechanism are in communication between a cooling medium outlet of the first motor and a cooling medium outlet of the second motor.
Clause 28. The electric drive apparatus according to any one of clauses 1 to 27, wherein the first motor comprises a first body and the second motor comprises a second body, the first body having a structure same as a structure of the second body, and a rotation shaft leading-out side of the first body being opposite to a rotation shaft leading-out side of the second body.
Clause 29. The electric drive apparatus according to clause 28, wherein the first body has a first wire connection portion and the second body has a second wire connection portion, an orientation of the first wire connection portion being the same as an orientation of the second wire connection portion.
Clause 30. The electric drive apparatus according to any one of clauses 1 to 29, wherein the first motor is an axial magnetic flux motor; and/or the second motor is an axial magnetic flux motor.
Clause 31. An electric drive apparatus, configured to drive a vehicle, the electric drive apparatus comprising:
   a first motor;
   a second motor spaced apart from the first motor along an axial direction of the first motor; and
   a controller provided between the first motor and the second motor, the controller being provided on a front side or a rear side of a rotation shaft of the first motor along a forward direction of the vehicle.
Clause 32. An electric drive system, comprising a battery and the electric drive apparatus according to any one of clauses 1 to 31, the battery being electrically connected to the electric drive apparatus.
Clause 33. An electrical device, comprising the electric drive system according to clause 32.

## Claims

1. An electric drive apparatus, comprising:
a first motor (11);
a second motor (12) spaced apart from the first motor (11) along an axial direction of the first motor (11);
a transmission mechanism (13) provided between the first motor (11) and the second motor (12);
a controller (14) provided between the first motor (11) and the second motor (12), at least part of the controller (14) and at least part of the transmission mechanism (13) being provided on opposite sides of a rotation shaft of the first motor (11).

2. The electric drive apparatus according to claim 1, wherein the rotation shaft of the first motor (11) and a rotation shaft of the second motor (12) are connected to a power input end of the transmission mechanism (13), and wherein at least part of the controller (14) is provided on a side of the rotation shaft of the first motor (11) facing away from a power output end of the transmission mechanism (13).

3. The electric drive apparatus according to claim 2, wherein the controller (14) and the transmission mechanism (13) are arranged along a first direction that is parallel to a mounting plane (15) of the electric drive apparatus and perpendicular to the axial direction of the first motor (11).

4. The electric drive apparatus according to claim 3, wherein the controller (14) has an embedded portion provided between the first motor (11) and the second motor (12), the embedded portion having a dimension in the first direction smaller than a dimension of the embedded portion in a second direction, and the second direction being perpendicular to the axial direction of the first motor (11) and the first direction, and/or;
wherein the controller (14) has an embedded portion provided between the first motor (11) and the second motor (12), the embedded portion having a dimension in the first direction smaller than a dimension of the embedded portion in the axial direction of the first motor (11).

5. The electric drive apparatus according to any one of claims 3 or 4, wherein in the first direction, the controller (14) has a first spacing from a central axis of the first motor (11), a ratio of the first spacing to a radius of the first motor (11) being smaller than or equal to 0.4.

6. The electric drive apparatus according to claim 3, wherein
the controller (14) does not protrude from the first motor (11) towards one side in a second direction; and/or
the controller (14) does not protrude from the first motor (11) towards the other side in the second direction,
wherein the second direction is perpendicular to the axial direction of the first motor (11) and the first direction.

7. The electric drive apparatus according to any one of claims 1 to 6, wherein the transmission mechanism (13) comprises a first shell (131) and the controller (14) comprises a second shell (141), the first shell (131) being in contact with the second shell (141), wherein, optionally, the first shell (131) comprises a first casing (1311) and a first shaft seat (1312) fixedly connected in the first casing (1311), the transmission mechanism (13) having a power input end rotatably mounted on the first shaft seat (1312), and the second shell (141) abutting against the first shaft seat (1312), wherein, more optionally, the second shell (141) comprises a second casing (1411) abutting agaisnt the first shaft seat (1312) and a first cover plate (1412) covering the second casing (1411), wherein, still more optionally, the first cover plate (1412) detachably covers a side of the second casing (1411) facing away from the first shell (131).

8. The electric drive apparatus according to claim 7, wherein
a connection between a side of the second shell (141) facing away from the first shell (131) and a side of the second shell (141) facing away from a mounting plane (15) of the electric drive apparatus is of a rounded structure; and/or
a connection between a side of the second shell (141) facing away from the first shell (131) and a side of the second shell (141) facing towards a mounting plane (15) of the electric drive apparatus is of a rounded structure, and/or,wherein a side of the second shell (141) facing away from the first shell (131) is of a first arc structure, and a central axis of the first arc structure is parallel to a central axis of the first motor (11).

9. The electric drive apparatus according to claim 7, wherein a side of the second shell (141) facing away from the first shell (131) is of a first arc structure, and a central axis of the first arc structure is parallel to a central axis of the first motor (11), wherein
the central axis of the first arc structure coincides with the central axis of the first motor (11), and a radius of the first arc structure is equal to a radius of the first motor (11); and/or wherein the controller (14) further comprises a control module (142), the control module (142) has a second arc structure, and a central axis of the second arc structure is parallel to the central axis of the first motor (11).

10. The electric drive apparatus according to any one of claims 7 to 9, wherein the first shell (131) and the second shell (141) are connected to form a shell body, the shell body having a first connection end (18) on one side of the first motor (11) in the axial direction and a second connection end (19) on the other side of the first motor (11) in the axial direction, wherein the first motor (11) is directly connected to the first connection end (18) and the second motor (12) is directly connected to the second connection end (19).
wherein, optionally, the first motor (11) comprises a third shell (111) directly connected to the first connection end (18), and wherein the second motor (12) comprises a fourth shell (121) directly connected to the second connection end (19).
wherein, more optionally,
the shell body has a transmission cavity (1313);
the transmission cavity (1313) passes through the first connection end (18) to form a first cavity port, wherein the third shell (111) comprises a third casing (1111) and a second cover plate (1112) connected to the third casing (1111), the third casing (1111) and the second cover plate (1112) being directly connected to the first connection end (18) to cap the first cavity port; and/or
the transmission cavity (1313) passes through the second connection end (19) to form a second cavity port, wherein the fourth shell (121) comprises a fourth casing (1211) and a third cover plate (1212) connected to the fourth casing (1211), the fourth casing (1211) and the third cover plate (1212) being directly connected to the second connection end (19) to cap the second cavity port, and/or,
wherein
the third shell (111) comprises a third casing (1111) and a first mount bracket connected to the third casing (1111); and/or
the fourth shell (121) comprises a fourth casing (1211) and a second mount bracket connected to the fourth casing (1211).

11. The electric drive apparatus according to any one of claims 7 to 10, wherein the first shell (131) is integrally formed with the second shell (141).

12. The electric drive apparatus according to any one of claims 1 to 11, wherein
the first transmission assembly (132) has a structure same as a structure of the second transmission assembly (133), and wherein the first transmission assembly (132) and the second transmission assembly (133) are arranged along the axial direction of the first motor (11) in a parallel way.
the transmission mechanism (13) comprises a first transmission assembly (132) and a second transmission assembly (133), the first transmission assembly (132) comprising a first power input shaft (1321) and a first power output shaft (1322) in a transmission connection to the first power input shaft (1321), the second transmission assembly (133) comprising a second power input shaft (1331) and a second power output shaft (1332) in a transmission connection to the second power input shaft (1331), the first power input shaft (1321) being connected to the rotation shaft of the first motor (11), and the second power input shaft (1331) being connected to a rotation shaft of the second motor (12), and/or;
further comprising a first cooling mechanism (16) and a second cooling mechanism (17), wherein:
the transmission mechanism (13) comprises a first transmission assembly (132) and a second transmission assembly (133);
the first cooling mechanism (16) is configured to sequentially supply a cooling medium to the first motor (11) and the first transmission assembly (132);
the second cooling mechanism (17) is configured to sequentially supply a cooling medium to the second motor (12) and the second transmission assembly (133); and
the first cooling mechanism (16) and the second cooling mechanism (17) are in communication between a cooling medium outlet of the first motor (11) and a cooling medium outlet of the second motor (12).

13. The electric drive apparatus according to claim 12, wherein a first end surface of the first power input shaft (1321) is flush with a first end surface of the first power output shaft (1322), and wherein a second end surface of the first power input shaft (1321) is flush with a second end surface of the first power output shaft (1322), and/or
wherein the first transmission assembly (132) further comprises a first transition shaft (1323) in a transmission connection between the first power input shaft (1321) and the first power output shaft (1322), wherein a first end surface of the first power input shaft (1321), a first end surface of the first transition shaft (1323) and a first end surface of the first power output shaft (1322) are flush with each other, and wherein a second end surface of the first power input shaft (1321), a second end surface of the first transition shaft (1323) and a second end surface of the first power output shaft (1322) are flush with each other.

14. The electric drive apparatus according to any one of claims 12 or 13, wherein a first end surface of the second power input shaft (1331) is flush with a first end surface of the second power output shaft (1332), and wherein a second end surface of the second power input shaft (1331) is flush with a second end surface of the second power output shaft (1332), and/or; wherein the second transmission assembly (133) further comprises a second transition shaft (1333) in a transmission connection between the second power input shaft (1331) and the second power output shaft (1332), a first end surface of the second power input shaft (1331), a first end surface of the second transition shaft (1333) and a first end surface of the second power output shaft (1332) being flush with each other, and a second end surface of the second power input shaft (1331), a second end surface of the second transition shaft (1333) and a second end surface of the second power output shaft (1332) being flush with each other.

15. The electric drive apparatus according to any one of claims 1 to 14, wherein:
the first motor (11) is an axial magnetic flux motor; and/or the second motor (12) is an axial magnetic flux motor; and/or
the first motor (11) comprises a first body (112) and the second motor (12) comprises a second body (122), the first body (112) having a structure same as a structure of the second body (122), and a rotation shaft leading-out side of the first body (112) being opposite to a rotation shaft leading-out side of the second body (122), wherein, optionally, the first body (112) has a first wire connection portion (1121) and the second body (122) has a second wire connection portion (1221), an orientation of the first wire connection portion (1121) being the same as an orientation of the second wire connection portion (1221).
